(19) Europäisches Patentamt / European Patent Office / Office européen des brevets

(11) **EP 4 368 541 B1**

(12) **EUROPEAN PATENT SPECIFICATION**

(45) Date of publication and mention
of the grant of the patent:
**22.04.2026 Bulletin 2026/17**

(21) Application number: **23205723.2**

(22) Date of filing: **25.10.2023**

(51) International Patent Classification (IPC):
*B65G 37/00* (2006.01)    *B65G 43/08* (2006.01)
*B65G 47/52* (2006.01)    *G01S 7/41* (2006.01)
*G01S 13/04* (2006.01)    *G01S 13/42* (2006.01)
*G01S 13/536* (2006.01)    *G01S 13/88* (2006.01)
*G06T 7/00* (2017.01)    *G01S 13/32* (2006.01)
*G01S 13/34* (2006.01)

(52) Cooperative Patent Classification (CPC):
**G01S 13/88; B65G 43/08; G01S 7/41; G01S 13/42;**
B65G 2203/0208; B65G 2203/0216;
B65G 2203/0233; B65G 2203/043

(54) **CONVEYOR CONTROL SYSTEM USING RADAR**

STEUERSYSTEM FÜR FÖRDERER MIT RADAR

SYSTÈME DE COMMANDE DE TRANSPORTEUR UTILISANT UN RADAR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.11.2022 IN 202211063877**

(43) Date of publication of application:
**15.05.2024 Bulletin 2024/20**

(73) Proprietor: **Honeywell International Inc.
Charlotte, NC 28202 (US)**

(72) Inventors:
• **CHUGH, Anjali
Charlotte, 28202 (US)**
• **KRITHIVASAN, Kannabiran
Charlotte, 28202 (US)**
• **RAMACHANDRA, Sadyojatha N.
Charlotte, 28202 (US)**
• **SPEECE, Steven Judson
Charlotte, 28202 (US)**

(74) Representative: **Haseltine Lake Kempner LLP
Cheapside House
138 Cheapside
London EC2V 6BJ (GB)**

(56) References cited:
EP-B1- 2 504 259        WO-A1-2021/074687
US-A1- 2016 221 762     US-A1- 2018 173 161

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

Conveyor lines may be used in warehouses, factories, etc. to move objects such as packages around, for example in an assembly line or to prepare packages for shipment. Some conveyor line systems may use proximity sensors to detect objects and control the operation of the conveyor lines based on the detection. However, such systems may suffer from technical challenges and limitations in detecting objects correctly. Through applied effort, ingenuity, and innovation, many of these identified problems have been solved by developing solutions that are included in embodiments of the present disclosure, many examples of which are described in detail herein.

United States Patent Application Publication US 2018/0173161 A1 relates to an imaging device and an imaging method by millimeter wave 3D holographic scanning. The millimeter wave 3D holographic scanning imaging device may include: a conveying apparatus configured to convey an object located thereon in a first direction; and at least one millimeter wave transceiving module arranged beside the conveying apparatus, each configured to be enabled to scan the object when the conveying apparatus conveys the object through the respective millimeter wave transceiving module, wherein each millimeter wave transceiving module is arranged to have its longitudinal direction extend in a direction intersecting the first direction, and includes a millimeter wave transceiving antenna array for transceiving millimeter wave signals.

International Patent Application Publication WO 2021/074687 A1 relates to an induction station for conveying packages in a storage facility. The induction station includes a plurality of parallel feed conveyors including at least first and second conveyors, and one or more buffer conveyors including at least a third conveyor for conveying the packages from the first and second conveyors to the third conveyor. The induction station further includes sensors for measuring a height, a weight, a length, and a width of each package. The induction station further includes sensors for detecting each package as one of a first package type or a second package type. The induction station further includes a controller to control a first a second speed, and a third speed of the first through third conveyors, respectively, based on the detected package type of each package and at least one of the weight, height, length, and width of each package.

European Patent EP 2504259 B1 relates to a conveyor device and to a method for operating the conveyor device. Said conveyor device comprises drives which are arranged successively in the direction of conveyance and are used for transporting objects, said drives predefining a desired path and/or a desired speed of the object. In a first step, at least one first value of at least one physical property is detected at a first time point on a first position, or said type of value is predefined. Also, at least one second value of said at least one property is detected after a detection time span at a second time point on a second position which is arranged in the direction of conveyance which is behind the first position at a detection distance. Subsequently, a plausibility test is carried out with regard to the coincidence of the first value with the second value and the presumed displacement of the objects occurs between the detection of the first value and the second value based on a) the desired path predetermined by the drives, b) the desired speed predefined by the drives in connection with the detection time span.

United States Patent Application Publication US 2016/0221762 A1 relates to a camera based vision system that recognizes and maximizes belt area utilization. A plurality of cameras are positioned at flow entry points of feed conveyors and at the singulator. The control algorithm recognizes individual items area, the rate at which individual objects are passing, and the area utilization of the collector belt. The video camera and computer based conveyor package management system monitor and control the number and size of the packages present on the infeed conveyors, collector conveyor, singulator conveyor and sorting conveyor in a package handling system wherein the camera data is used to measure the available area or space on the conveyors to maintain a desired density of packages on selected conveyor(s). The conveyor speed is controlled as a function of occupancy on a collector or just prior to a singulator or receiver.

**BRIEF SUMMARY**

The invention provides a conveyor control system as specified in claim 1. The invention further provides a method for controlling a conveyor as specified in claim 9.

In various embodiments a conveyor control system is provided. The conveyor control system may comprise a radar device configured to send a first electromagnetic wave to a first object and a second electromagnetic wave to a second object on a first conveyor section, receive a reflection of the first electromagnetic wave from the first object and a reflection of the second electromagnetic field from the second object, determine first and second timing or frequency variations between the sent and received first and second electromagnetic waves respectively. The conveyor control system may comprise a controller electronically coupled to the one or more radar devices, the controller configured to generate a point cloud using any of the first and second timing or frequency variations, determine any of first dimensions, a first distance, and a first speed of movement of the first object and second dimensions, a second distance, and a second speed of movement of the second object on the first conveyor section using the point cloud, determine a first gap between the first object and the second object using any of the first and second dimensions, the first and second distances, and the first and second speeds of movement, and control one or more first operating parameters of the first conveyor section using the first gap.

In an example embodiment, the radar device is configured to send a third electromagnetic wave to a third object and a fourth electromagnetic wave to a fourth object on a second conveyor section, receive a reflection of the third electromagnetic wave from the third object and a reflection of the fourth electromagnetic field from the fourth object, and determine third and fourth timing or frequency variations between the sent and received third and fourth electromagnetic waves respectively.

In an example embodiment, the controller is configured to generate the point cloud using any of the third and fourth timing or frequency variations, determine any of third dimensions, a third distance, and a third speed of movement of the third object and fourth dimensions, a fourth distance, and a fourth speed of movement of the fourth object on the second conveyor section using the point cloud, determine a second gap between the third object and the fourth object using any of the third and fourth dimensions, the third and fourth distances, and the third and fourth speeds of movement, and control any of the one or more first operating parameters of the first conveyor section and one or more second operating parameters of the second conveyor section using any of the first gap and the second gap.

In an example embodiment, the controller is configured to determine any of a minimum first load density and a maximum first load density for the first conveyor section, a minimum second load density and a maximum second load density for the second conveyor section, a minimum first gap and a maximum first gap between the first and second objects, a minimum second gap and a maximum second gap between the third and fourth objects, wherein a first load density of the first conveyor section is determined using any of the first and second dimensions, the first and second distances, the first and second speeds of movement, the first gap, and the point cloud, and a second load density for the second conveyor section is determined using any of the third and fourth dimensions, the third and fourth distances, the third and fourth speeds of movement, the second gap, and the point cloud.

In an example embodiment, the controller is configured to control any of the one or more first operating parameters of the first conveyor section and the one or more second operating parameters of the second conveyor section such that any of the first gap remains between the minimum first gap and the maximum first gap, the second gap remains between the minimum second gap and the maximum second gap, the first load density remains between the minimum first load density and the maximum first load density, and the second load density remains between the minimum second load density and the maximum second load density.

In an example embodiment, the controller is configured to control any of the one or more first operating parameters of the first conveyor section and the one or more second operating parameters of the second conveyor section such that the first gap is about the same as the second gap.

In an example embodiment, the first conveyor section is an accumulation conveyor, and the second conveyor section is a main conveyor connected to the accumulation conveyor.

In an example embodiment, the controller is configured to determine if the second object can be interleaved between the third and fourth objects by comparing the second dimensions with the second gap, and control any of the one or more first operating parameters of the first conveyor section and the one or more second operating parameters of the second conveyor section to interleave the second object between the third and fourth objects if determined that the second object can be interleaved between the third and fourth objects.

In an unclaimed example embodiment, the one or more first or second operating parameters comprise any of a first or second conveyor section speed, acceleration, and operation pause time or duration, respectively.

In an example embodiment, the radar device comprises a frequency modulated continuous wave (FMCW) radar device. In an example embodiment, the controller is configured to determine coordinates of a first plurality of points on a periphery of the first object using the point cloud, assign a first identification to the first object using the coordinates, determine a first destination for the first object using the first identification, and control the one or more first operating parameters of the first conveyor section so that the first object reaches the first destination.

In an example embodiment, the determining the first dimensions of the first object comprises determining an elevation angle for the first object using the point cloud, determining a plurality of bottom vertex coordinates of the first object using the elevation angle, wherein the plurality of the bottom vertices touch the first conveyor section, determining a first length of the first object using a difference in a first and second abscissa coordinates for a first and second bottom vertices of the first object and a first uncertainty value, wherein the first uncertainty value is a function of any of noise, movement, obstruction, and imperfection of the first object, determining a first width of the first object using a difference in a first and second ordinate coordinates for a third and fourth bottom vertices of the first object and a second uncertainty value, wherein the second uncertainty value is a function of any of the noise, movement, obstruction, and imperfection of the first object, determining the dimensions of the first object using the first length and first width of the first object.

In an example embodiment, the controller is configured to determine the first and second uncertainty values by iteratively determining a plurality of lengths and widths of a plurality of objects, comparing the determined plurality of lengths and widths with an image-based plurality of lengths and widths, and adjusting the first and second uncertainty values using the comparison.

In various embodiments herein a method for controlling a conveyor is provided. The method may comprise sending a first electromagnetic wave to a first object and a second electromagnetic wave to a second object on a first conveyor section, receiving a reflection of the first electromagnetic wave from the first object and a reflection of the second electromagnetic field from the second object, determining first and second timing or frequency variations between the sent and received first and second electromagnetic waves respectively, generating a point cloud using any of the first and second timing or frequency variations, determining any of first dimensions, a first distance, and a first speed of movement of the first object and second dimensions, a second distance, and a second speed of movement of the second object on the first conveyor section using the point cloud, determining a first gap between the first object and the second object using any of the first and second dimensions, the first and second distances, and the first and second speeds of movement, and controlling one or more first operating parameters of the first conveyor section using the first gap.

In example embodiments, the method for controlling a conveyor comprises sending a third electromagnetic wave to a third object and a fourth electromagnetic wave to a fourth object on a second conveyor section, receiving a reflection of the third electromagnetic wave from the third object and a reflection of the fourth electromagnetic field from the fourth object, determining third and fourth timing or frequency variations between the sent and received third and fourth electromagnetic waves respectively, generating the point cloud using any of the third and fourth timing or frequency variations, determining any of third dimensions, a third distance, and a third speed of movement of the third object and fourth dimensions, a fourth distance, and a fourth speed of movement of the fourth object on the second conveyor section using the point cloud, determining a second gap between the third object and the fourth object using any of the third and fourth dimensions, the third and fourth distances, and the third and fourth speeds of movement, and controlling any of the one or more first operating parameters of the first conveyor section and one or more second operating parameters of the second conveyor section using any of the first gap and the second gap.

In example embodiments, the method for controlling a conveyor comprises determining any of a minimum first load density and a maximum first load density for the first conveyor section, a minimum second load density and a maximum second load density for the second conveyor section, a minimum first gap and a maximum first gap between the first and second objects, a minimum second gap and a maximum second gap between the third and fourth objects, wherein a first load density of the first conveyor section is determined using any of the first and second dimensions, the first and second distances, the first and second speeds of movement, the first gap, and the point cloud, and a second load density for the second conveyor section is determined using any of the third and fourth dimensions, the third and fourth distances, the third and fourth speeds of movement, the second gap, and the point cloud.

In example embodiments, the method for controlling a conveyor comprises controlling any of the one or more first operating parameters of the first conveyor section and the one or more second operating parameters of the second conveyor section such that any of the first gap remains between the minimum first gap and the maximum first gap, the second gap remains between the minimum second gap and the maximum second gap, the first load density remains between the minimum first load density and the maximum first load density, and the second load density remains between the minimum second load density and the maximum second load density.

In unclaimed example embodiments, the method for controlling a conveyor comprises controlling any of the one or more first operating parameters of the first conveyor section and the one or more second operating parameters of the second conveyor section such that the first gap is about the same as the second gap.

In example embodiments, the first conveyor section is an accumulation conveyor, and the second conveyor section is a main conveyor connected to the accumulation conveyor.

In example embodiments, the method for controlling a conveyor comprises determining if the second object can be interleaved between the third and fourth objects by comparing the second dimensions with the second gap, and controlling any of the one or more first operating parameters of the first conveyor section and the one or more second operating parameters of the second conveyor section to interleave the second object between the third and fourth objects if determined that the second object can be interleaved between the third and fourth objects.

In unclaimed example embodiments, the one or more first or second operating parameters comprise any of a first or second conveyor section speed, acceleration, and operation pause time or duration, respectively.

In example embodiments, the method for controlling a conveyor comprises determining coordinates of a first plurality of points on a periphery of the first object using the point cloud, assigning a first identification to the first object using the coordinates, determining a first destination for the first object using the first identification, and controlling the one or more first operating parameters of the first conveyor section so that the first object reaches the first destination.

In example embodiments, the method for controlling a conveyor comprises determining an elevation angles for the first object using the point cloud, determining a plurality of bottom vertex coordinates of the first object using the elevation angle, wherein the plurality of the bottom vertices touch the first conveyor section, determining a first length of the first object using a difference in a first and second abscissa coordinates for a first and second bottom vertices of the first object and a first uncertainty value, wherein the first uncertainty value is a function of any of noise, movement, obstruction, and imperfection of the first object, determining a first width of the first object using a difference in a first and second ordinate coordinates for a third and fourth bottom vertices of the first object and a second uncertainty value, wherein the second uncertainty value is a function of any of the noise, movement, obstruction, and imperfection of the first object, and determining the dimensions of the first object using the first length and first width of the first object.

In example embodiments, the method for controlling a conveyor comprises iteratively determining a plurality of lengths and widths of a plurality of objects, comparing the determined plurality of lengths and widths with an image-based plurality of lengths and widths, and adjusting the first and second uncertainty values using the comparison.

The foregoing illustrative summary, as well as other exemplary objectives and/or advantages of the disclosure, and the manner in which the same are accomplished, are further explained in the following detailed description and its accompanying drawings.

## BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:

FIG. 1A illustrates an example schematic diagram depicting a conveyor system as used in the prior art;
FIG. 1B illustrates an example schematic diagram depicting a conveyor system as used in the prior art;
FIG. 2A illustrates an example schematic diagram depicting a conveyor control system in accordance with various embodiments of the present disclosure;
FIG. 2B illustrates an example schematic diagram depicting a conveyor control system in accordance with various embodiments of the present disclosure;
FIG. 3 illustrates an example schematic diagram depicting a conveyor control system in accordance with various embodiments of the present disclosure;
FIG. 4 illustrates an example schematic diagram depicting a conveyor control system in accordance with various embodiments of the present disclosure;
Fig. 5 illustrates an example schematic diagram depicting a controller in accordance with various embodiments of the present disclosure;
FIG. 6 is a flowchart diagram illustrating example operations in accordance with various embodiments of the present disclosure;
Fig. 7 is a schematic diagram illustrating example radar device and an object in the conveyor control system in accordance with various embodiments of the present disclosure;
FIG. 8 is a flowchart diagram illustrating example operations in accordance with various embodiments of the present disclosure; and
FIG. 9 is a flowchart diagram illustrating example operations in accordance with various embodiments of the present disclosure.

## DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The components illustrated in the figures represent components that may or may not be present in various embodiments of the present disclosure described herein such that embodiments may include fewer or more components than those shown in the figures while not departing from the scope of the appended claims. Some components may be omitted from one or more figures or shown in dashed line for visibility of the underlying components.

The phrases "in an example embodiment," "some embodiments," "various embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such components or features may be optionally included in some embodiments, or may be excluded.

The terms "electronically coupled" or "in electronic communication with" in the present disclosure refer to two or more electrical elements (for example, but not limited to, a controller, an example processing circuitry, communication module, input/output module, memory) and/or electric circuit(s) being connected through wired means (for example but not limited to, conductive wires or traces) and/or wireless means (for example but not limited to, wireless network, electromagnetic field), such that data and/or information (for example, electronic indications, signals) may be transmitted to and/or received from the electrical elements and/or electric circuit(s) that are electronically coupled.

In various embodiments, conveyor systems may be used for moving and/or controlling the movement of objects from one place to another for example in warehouses, factories, airports, train stations, and/or other locations. In various embodiments, the conveyor system includes conveyor lines for moving the objects such as packages, equipment, parts, products, luggage, bags, etc. The movement of objects may be used for purposes such as preparation for shipment, preparation for packaging, preparation for assembly in an assembly line, transferring ownership and/or custody, moving luggage through security monitors, to or from cargo ramps, receiving luggage at check-in booths, delivering luggage in destinations, etc.

In various embodiments, the conveyor lines may move at various speeds and may move objects of various sizes and/or shapes. In various embodiments, the conveyor system may include a controller for controlling one or more operating parameters of conveyor lines. The operation parameters may include speed, acceleration, pause time, pause duration, etc. of the conveyor line.

A conveyor line may carry objects that are placed close to each other on the surface of the conveyor line or are placed further apart from each other. As the objects are placed closer to each other, a load density of the conveyer line increases. As the objects are placed further apart from each other, the load density of the conveyor line decreases. A high load density may cause objects to be damaged, for example by running to each other or running into other obstacles or barriers. A high load density may also clog a section of the conveyor line and cause delays in delivering the objects to their corresponding destinations. A high load density may also be undesirable in the destination. For example, it may be undesirable for individuals and/or machines that collect objects from a conveyor line to have a high load density of objects arrive at the destination. For example, when collecting luggage at a baggage claim at an airport, having a group of luggage items crowded next to each other makes collecting them difficult, it may harm the individual collecting it, and/or it may damage the luggage. On the other hand, a low load density may reduce an efficiency of the conveyor line and or the conveyor system.

It is desirable to maintain a consistent load density on a conveyor line. Various embodiments herein determine the load density of one or more sections of one or more conveyor lines and control the operating parameters of the one or more conveyor lines according to the determined load densities. By providing a consistent load density across one or more conveyor lines, various example embodiments herein provide for the conveyor system to function efficiently and reduce delays and/or other consequences caused by high load densities. In various embodiments, to determine the load densities of a conveyor line, distance, dimensions and/or speed of movement of the objects, and/or gaps between the objects on the conveyor line are determined.

Various embodiments herein determine the gaps among the objects on one or more sections of one or more conveyor lines and control the operating parameters of the one or more conveyor lines such that the gaps among the objects remain between a minimum and a maximum amount. By providing consistent gaps among the objects across one or more conveyor lines, various example embodiments herein provide for the conveyor system to function efficiently and reduce delays and/or other consequences caused by high load densities.

A conveyor system may use proximity sensors, for example line of sight optical detectors, to detect objects on the conveyor line. Line of sight detectors may have blind spots and by using line of sight detectors some objects on the conveyor line may not be detected.

In various embodiments herein, technical challenges and limitations in detecting objects are solved by using one or more radar systems that detect any of the distance, dimensions, gaps, angles, and/or speed of movement, etc., of the objects on one or more conveyor lines. For example, the conveyor system obtains a three-dimensional view of the objects. The three-dimensional view of the objects may include objects further away from the radar on the conveyor line in multiple and/or all directions. Therefore, as for example compared with proximity sensors, a larger field of view of the objects are provided in various embodiments herein. In the embodiments according to the invention, using the information obtained using radar the conveyor system more accurately controls the operating parameters of the conveyor lines to provide the desired load densities on various sections of a conveyor line or on multiple conveyor lines, by having more accurate and/or more comprehensive information of current load densities on the conveyor line(s).

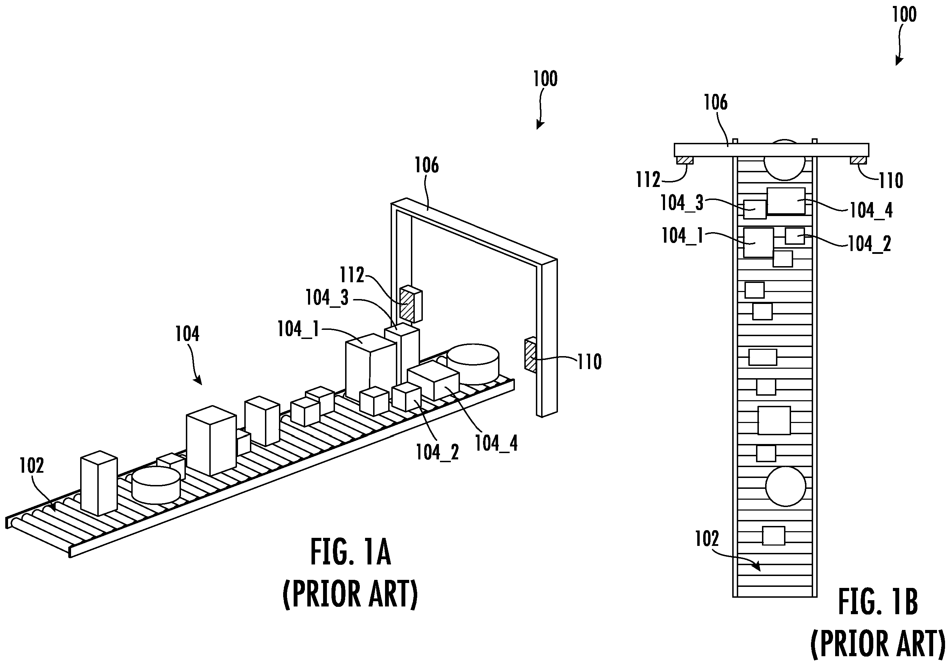

Referring now to Fig. 1a, a schematic diagram depicting a conveyor system 100 as used in the prior art is provided. Fig. 1b is a schematic diagram depicting the conveyor system 100 from a different angle for illustration purposes. The conveyor system 100 may include a conveyor line 102 configured to move one or more objects 104. The conveyor system 100 may include an arch 106. The arch 106 may be configured to hold one or more proximity sensors such as proximity sensors 110 and 112. The proximity sensors 110 and 112 may use optical signal or line of sight detection to detect the objects on the conveyor line 102 as they pass through the arch 106.

Using proximity sensors that require line of sight may be inadequate in detecting objects on the conveyor line 102 that are outside of the immediate proximity of the arch 106. The proximity sensors may need to be placed close to the objects 102, hence they may be placed low on the arch 106 and close to the conveyor line 102. Therefore, an object may block the line of sight of one of the proximity sensors 110 or 112 and blind the proximity sensor with respect to detecting another object. For example, object 104_1 may blind the line of sight of the proximity sensor 112 in detecting object 104_2 as they pass through the arch 106. In an example, an object may be located between two larger objects on either side, hence it may not be detected by any of the proximity sensors 110 and 112.

Two objects that are located in close proximity of each other may be detected as one larger object by proximity sensors. For examples, objects 104_3 and 104_4 are located in close proximity of each other. The proximity sensors 110 and 112 may detect the two objects 104_3 and 104_4 as one larger object, resulting in inaccurate detection of the objects on the conveyor line 102. For example, if the proximity sensors are used to count the number of objects moved by the conveyor belt, inaccurate detection of objects may result in an inaccurate count. In some examples, inaccurate detection of objects may result in wrong placement, routing, delivery, and/or shipment of objects, etc.

At least due to the limitations described above, using proximity sensor, line of sight sensors, and/or sensors with limited range and/or field of view as disclosed in the prior art for detecting objects may not provide a correct determination of the load density on various sections of the conveyor line. Incorrect determination of load densities may result in inadequate control and/or balancing of load densities. Slowdowns may occur as a result of high load densities in various conveyor sections, which may result in undue delays in the movement of the objects.

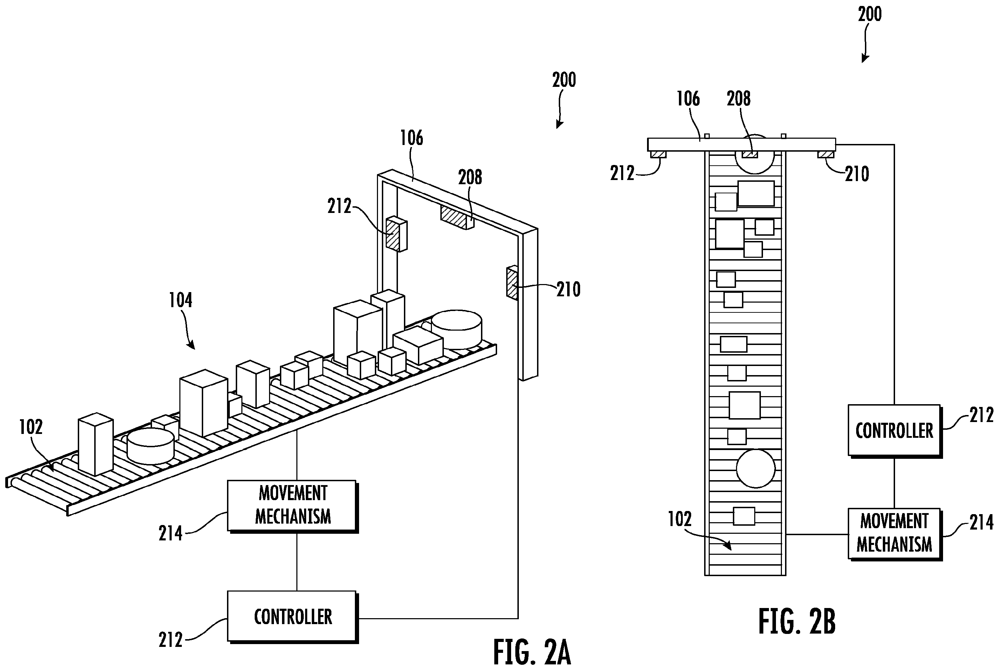

Referring now to Fig. 2a, a schematic diagram depicting a conveyor control system 200 according to various embodiments herein is provided. Fig. 2b is a schematic diagram depicting the conveyor control system 200 from a different angle for illustration purposes. In various embodiments, the conveyor control system 200 includes a conveyor line 102 and one or more radar devices. For illustration purposes, radar devices 208, 210, and 212 are depicted in Figs. 2a, 2b. In various embodiments, the conveyor control system 200 may have any number of radar devices, for example one, two, three, and/or more. In various embodiments, the radar devices are placed above the conveyor line 102. In various embodiments, the radar devices are placed on an arch 106. In various embodiments, multiple arches may be located in various conveyor sections, and each arch may hold one or more radar devices. In various embodiments, the radar devices are placed on any supporting structure such as a pole, a bar, a wall, ceiling, etc.

In various embodiment, any and/or all of the radar devices are placed sufficiently high above the conveyor line 102 to have an unobstructed field of view of any and/or all the objects 104 on the conveyor line 102. For example, any and/or all of the radar devices may be placed higher than the tallest object 104.

In various embodiments, any and/or all of the radar devices have ordinate field of views that at least covers the width of the conveyor line 102. In various embodiment, any and/or all of the radar devices have sufficient abscissa field of views to cover a sufficient length of the conveyor line 102. The sufficient length of the conveyor line 102 may cover the length of at least two objects 104. For example, any and/or all of the radar devices have an abscissa field of view of at least 20 degrees. For example, any and/or all of the radar devices have an abscissa field of view of at least 40 degrees. For example, any and/or all of the radar devices have an abscissa field of view of at least 60 degrees. For example, any and/or all of the radar devices have an abscissa field of view of at least 80 degrees. For example, any and/or all of the radar devices have an abscissa field of view of at least 100 degrees. For example, any and/or all of the radar devices have an abscissa field of view of at least 120 degrees. For example, any and/or all the radar devices have an abscissa field of view of at least 140 degrees. For example, any and/or all of the radar devices have an abscissa field of view of at least 160 degrees. For example, any and/or all of the radar devices have an abscissa field of view of at least 180 degrees. In example embodiments, the field of view of the radar devices may be variable and the sufficient field of view of the radar systems may depend on conditions and/or particular requirements of the conveyor control system 200.

In various embodiments, the conveyor control system 200 includes a controller 212. In various embodiments, the controller 212 is electronically coupled to any of the radar devices and is configured to control operating parameters of the conveyor line 102 using data collected by the radar devices such as any of dimensions, shapes, speed of movement, angles, and/or distances of the objects 104 and/or gaps among the objects 104. In various embodiment, a movement mechanism 214 is electronically coupled to the controller 212. The movement mechanism 214 may regulate any of the speed of movement, acceleration, and/or pause time or duration, etc. of the conveyor line 102 using an output from the controller 212. In example embodiments, the movement mechanism includes any of a motor, actuator, magnetic device, induction device, etc.

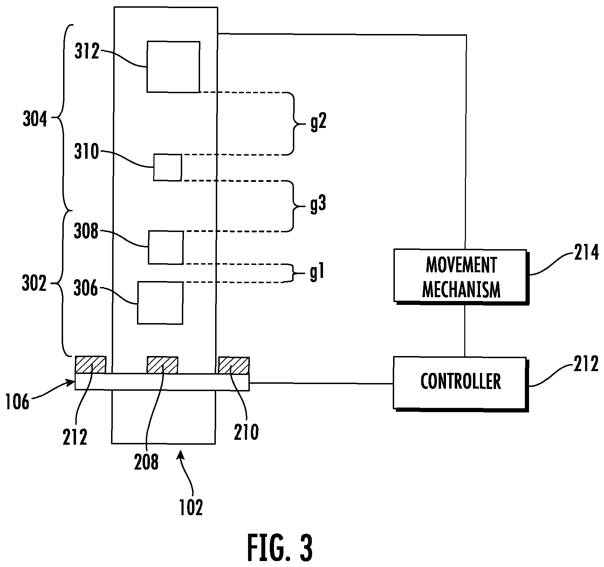

Referring now to Fig. 3, a schematic diagram depicting the conveyor control system 200 according to various embodiments herein is provided. In various embodiments, the conveyor control system may include radar devices, for example any of the radar devices 208, 210, 212, mounted on the arch 106. In various embodiments, the conveyor control system 200 may include any number of radar systems. In various embodiments, the radar devices send and receive electromagnetic waves to a first object 306 and a second object 308 on a first conveyor section 302. It is noted that a conveyor section may refer to any part or portion up to and including the whole of a conveyor line.

In example embodiments, the radar devices include a frequency modulated continuous wave (FMCW) radar device. An FMCW radar transmits and receives a continuous wave to the objects on a conveyor line and/or a conveyor section, for example the first object 306 and the second object 308. As used in various embodiments herein, since the transmit wave of FMCW radar is continuous and not pulsed, FMCW radars may be simpler to manufacture and/or operate.

In example embodiments, the FMCW radar scans its continuous wave such that it reaches various objects on the conveyor line, for example the first object 306 and the second object 308. In example embodiments, an instance of the continuous wave that reaches and reflects from the first object 306 is referred to as the first electromagnetic wave and an instance of the continuous wave that reaches and is reflected from the second object 308 is referred to as the second electromagnetic wave. In example embodiments, the radar device may use a physical scanning, for example via a rotation of the radar device, such that the continuous wave reaches various objects on the conveyor line. In example embodiments, the radar device uses electronic scanning, for example using a phase array to steer the continuous wave such that it reaches the various objects on the conveyor line. In example embodiments, the radar device receives the reflection of the first electromagnetic wave from the first object 306 and receives the reflection of the second electromagnetic wave from the second object 308.

When a continuous wave is reflected by a point on an object, a frequency of the reflected wave is shifted with respect to the emitted wave. In various embodiments, the radar device determines first and second timing or frequency variations between the sent and received first and second electromagnetic waves respectively. For example, the radar device receives the reflected wave and mixes the reflected wave with a local copy of the emitted wave. In various embodiments, as a result of the mixing a beat frequency and a doppler frequency may be measured which determine the distance and/or speed of movement of the point on the object. In various embodiments, using the angle of scanning, an angle of the point in the object where the wave is reflected from is determined. For example, if at a given time during the scanning process the radar device emits the wave at an elevation and/or azimuth angle with respect to reference coordinates, the wave reaches a point on the object that is located at the same elevation and/or azimuth angle with respect to the reference coordinates.

In various embodiments, the controller 212 is electronically coupled to the radar devices. In various embodiments, the controller 212 using any of the determined distance, speed, and/or angle of various points on the objects, generates a point cloud of the objects on various conveyor sections. The distance of the objects may for example be determined from any of the radar devices, the arch 106, and/or any other reference coordinates. For example, a point cloud is a three-dimensional rendering of various objects in a scene according to their respective coordinates determined using for example distance and angle with respect to the reference coordinates. In various embodiments, the point cloud may be time dependent using the determined speed of movement of each point. In various example embodiments, the controller 212 determines a four-dimensional point cloud of the objects on various conveyor sections which includes the time dependency of the respective coordinates of each point.

In various embodiments, the controller 212 determines any of first dimensions, a first shape, a first distance, and a first speed of movement of the first object 306 on the first conveyor section 302 using the point cloud. In various embodiments, the controller 212 determines any of second dimensions, a second shape, a second distance, and a second speed of movement of the second object 308 on the first conveyor section 302 using the point cloud. For example, the controller 212 may perform image processing such as object recognition techniques on the point cloud for determining any of the dimensions, distance, and/or speed of movement of each object. For example, the controller 212 may perform segmentation and classification techniques on the point cloud to recognize objects and/or determine any of the dimensions, shapes, distance, and/or speed of movement.

In the embodiments according to the invention, the controller 212 determines first dimensions, first shape, first distance, first angle(s) of various points, and/or first speed of movement of the first object 306 and second dimensions, second shape, second angle(s) of various points, second distance, and/or second speed of movement of the second object 308 on the first conveyor section 302 using timing or frequency variations between the sent and received electromagnetic waves. In various embodiments, by determining and/or analyzing timing or frequency variations between the sent and received electromagnetic waves, the controller 212 may determine distances, and/or speeds of movements of various points on the objects. In various embodiments, by using the angle of scan when sending and receiving the electromagnetic waves to various points on the objects, the controller 212 determines an angle of the corresponding point. By using distance, and angle of each point on an object, the controller 212 determines dimensions of the object for example by using triangulation. Using any of dimensions, distances, and angles of various points of an object, the controller 212 may determine a shape of the object using image rendering.

In various embodiments, the controller 212 determines a first gap g1 between the first object 306 and the second object 308. In the embodiments according to the invention, the controller 212 determines the first gap g1 using any of the determined first and second dimensions, the first and second distances, and/or the first and second speeds of movement for the first and second objects 306 and 308. For example, the first gap g1 may be determined using a difference of the determined first and second distances. For example, the first gap g1 may be determined by adjusting the difference of the determined first and second distances with the first or second dimensions of the first or second objects. In various embodiments, using the determined speed of movement, the first gap g1 may be determined as a function of time to reflect that the first and second objects 306 and 308 move on the first conveyor section 302. For example, the controller 212 may use the first and second speeds of movement of the objects 306 and 308 to determine the first gap g1 as a function of time.

In various examples, the controller 212 may determine the gap g1 using the point cloud. For example, by analyzing the point cloud and/or performing image processing techniques such as object recognition techniques on the point cloud, the controller 212 may identify the first and second objects 306 and 308 or determine the boundaries of the first or second objects 306 and 308 and determine the gap g1 between them. For example, any of a Region-based Convolutional Neural Networks (R-CNN), Region-based Fully Convolutional Network (R-FCN), Histogram of Oriented Gradients (HOG), Single Shot Detector (SSD), or Spatial Pyramid Pooling (SPP-net) methods may be applied to the point cloud for detecting the objects or their boundaries.

In various embodiments, the controller 212 may determine a first load density of the first conveyor section 302. The first load density may be an indicator of how densely and/or how closely the objects are located in the first conveyor section 302. In various embodiments, the controller 212 may determine the first load density using any of the first and second dimensions, the first and second distances, the first and second shapes, the first and second speeds of movement of the objects 306 and 308, and/or the first gap g1. In various embodiments, the controller 212 may determine the first load density using the point cloud. For example, by analyzing the point cloud using any image processing techniques such as those described above, the controller 212 may determine how closely the objects are placed on the conveyor section. In various embodiments, the controller may determine a ratio of the surface area occupied by objects to the surface area of the conveyor section as an indicator of load density.

In various embodiments, the determined first load density may be a function of time due to the movement of the first conveyor section. In various embodiments, the first load density may be an indication of the number of objects per unit length in the first conveyor section 302. For example, the load density for a conveyor section may be a number of objects on the conveyor section divided by a length of the conveyor section. In an example embodiment, the first load density is inversely proportional to the gap among the objects on the first conveyor section. For example, the first load density may be inversely proportional to the first gap g1.

In various embodiments the controller 212 controls one or more first operating parameters of the first conveyor section 302 using any of the first and second dimensions, the first and second distances, the first and second speeds of movement, the first gap g1, and the first load density. In various embodiments, the controller 212 controls the first operating parameters by controlling the movement mechanisms 214.

In various embodiments, the controller 212 determines a minimum first load density and a maximum first load density for the first conveyor section 302. When a load density of a conveyor section is too low, the conveyor section surface may not be fully utilized, hence the throughput and/or efficiency of the conveyor section and/or the larger conveyor system may be reduced. When a load density of a conveyor section is too high, the conveyor section may be overcrowded with objects and the objects may crash against each other and be damaged. An overcrowded conveyor section may also cause slowdowns and consequently reduce the throughput of the conveyor section and negatively impact the throughput and/or efficiency of the conveyor system. In various embodiments herein, the controller 212 determines the minimum load density and the maximum load density for conveyor sections using for example the type, location, and surroundings of the conveyor section. For example, by limiting load densities of the conveyor sections between minimum and maximum limits, the throughput and/or efficiency of the conveyor section and/or the overall conveyor system increases.

In various embodiments, the controller 212 determines a minimum first gap and a maximum first gap between the first and second objects 306 and 308. In example embodiments, the minimum first gap may be determined using a minimum first load density for the first conveyor section 302, and a maximum first gap for the first conveyor section may be determined using a maximum first load density for the first conveyor section 302.

In various embodiments, the controller 212 controls one or more first operating parameters of the first conveyor section so that the first gap g1 between the first object 306 and the second object 308 remains greater than or equal to the minimum first gap and less than or equal to the maximum first gap as the first and second objects 306 and 308 are moved using the first conveyor section 302. In various embodiments, the one or more first operating parameters include any of a first conveyor section speed, first conveyor section acceleration, and first conveyor section operation pause timing and/or duration.

In various embodiments, the controller 212 controls the movement mechanism 214 for controlling the one or more first operating parameters of the first conveyor section. The movement mechanism 214 may include any of a motor, actuator, magnetic devices, etc. The movement mechanism 214 may be coupled to the conveyor line 102 and/or the first conveyor section 302 mechanically, magnetically, etc. The movement mechanism 214 may be configured to adjust the one or more first operating parameters of the first conveyor section.

In various embodiments, when the controller 212 determines that the first gap g1 is outside the minimum and maximum limits determined for the first gap, the controller 212 may reduce and/or increase the speed and or acceleration of any portion or all of the first conveyor section 302, and/or temporality pause and/or resume operation of any portion or all of the first conveyor section 302 so that the first gap g1 is adjusted to be within the desirable range. **In** various embodiments, when the controller 212 determines that the first load density is outside the minimum and maximum limits determined for the first load density, the controller 212 may reduce and/or increase the speed and or acceleration of any portion or all of the first conveyor section 302, and/or temporality pause and/or resume operation of any portion or all of the first conveyor section 302 so that the first load density is adjusted to be within the desirable range.

**In** various embodiments, the one or more radar devices of the conveyor control system 200 are configured to send and receive electromagnetic waves to a third object 310 and a fourth object 312 on a second conveyor section 304. **In** example embodiments, the FMCW radar scans its continuous wave such that it reaches various objects on the conveyor line, for example the third object 310 and the fourth object 312. **In** example embodiments, an instance of the continuous wave that reaches and reflects from the third object 310 is referred to as the third electromagnetic wave and an instance of the continuous wave that reaches and is reflected from the fourth object 312 is referred to as the fourth electromagnetic wave. The radar device may scan the objects on the conveyor sections as for example previously described. **In** example embodiments, the radar device receives the reflection of the third electromagnetic wave from the third object 310 and receives the reflection of the fourth electromagnetic wave from the fourth object 312. **In** various embodiments, the radar devices determine third and fourth timing or frequency variations between the sent and received third and fourth electromagnetic waves respectively.

**In** various embodiments, the controller 212 determines the point cloud that includes any or all of the objects on the conveyor line. For example, the controller 212 determines the point cloud including the third object 310 and the fourth object 312 using any of the third and fourth timing or frequency variations.

**In** various embodiments, the controller 212 is configured to determine any of third dimensions, third distance, third shape, and third speed of movement of the third object 310 on the second conveyor section 304 using the point cloud. In various embodiments, the controller is configured to determine any of fourth dimensions, a fourth shape, a fourth distance, and a fourth speed of movement of a fourth object 312 on the second conveyor section 304 using the point cloud. The distance of the objects may be determined from any of the radar devices, the arch 106, and/or any other reference point. In various embodiments, the dimensions, shapes, angles, and speed of objects may be determined using timing or frequency variation in corresponding sent and received waves similar to previously described methods with respect to the first and second objects.

**In** various embodiments the controller 212 determines a second gap g2 between the third object 310 and the fourth object 312 using any of the third and fourth dimensions, the third and fourth distances, and the third and fourth speeds of movement using similar methods as previously described with respect to the first and second objects. In various embodiments, the controller 212 determines a second gap g2 between the third object 310 and the fourth object 312 using the point cloud using similar methods as previously described with respect to determining the gap g1 using the point cloud.

**In** various embodiments, the controller 212 determines a second load density of the second conveyor section 304 similar to the methods described with respect to determining the first load density of the conveyor section 302. In various embodiments, the minimum and maximum limits for the second gap g2 and the second load density may be determined similar to the minimum and maximum limits for the first gap g1 and the first load density.

**In** various embodiments the controller 212 controls one or more first operating parameters of the first conveyor section 302 and controls one or more second operating parameters of the second conveyor section using any of the first gap g1, the second gap g2, the first load density, and the second load density. In various embodiments the controller 212 controls one or more first operating parameters of the first conveyor section 302 and controls one or more second operating parameters of the second conveyor section using the point cloud.

In various embodiments, the controller 212 controls any of the one or more first operating parameters of the first conveyor section 302 and the one or more second operating parameters of the second conveyor section 304 such that any of the first gap remains between the minimum first gap and the maximum first gap and/or the second gap remains between the minimum second gap and the maximum second gap as the objects are moved on their corresponding conveyor sections. In various embodiments, the controller 212 controls any of the one or more first operating parameters of the first conveyor section 302 and the one or more second operating parameters of the second conveyor section 304 such that any of the first load density remains between the minimum first load density and the maximum first load density and/or the second load density remains between the minimum second load density and the maximum second load density. By keeping the gaps and/or load densities between the objects between minimum and maximum limits for various conveyor sections, various embodiments herein evenly distribute objects among the various conveyor sections to increase efficiency of the conveyor system and reduce delays, damage to objects, and/or other undesired consequences of highly dense areas on conveyor lines.

In various embodiments, the one or more second operating parameters include any of a second conveyor section speed, second conveyor section acceleration, and second conveyor section operation time and/or pause duration. For example, when the controller 212 determines that the second gap g2 is outside the minimum and maximum limits determined for the second gap, the controller 212 may reduce and/or increase the speed and or acceleration of any portion or all of the second conveyor section 304, and/or temporality pause and/or resume operation of any portion or all of the second conveyor section 304 to bring the second gap g2 between the minimum and maximum limits determined for the second gap.

In various embodiments, the controller 212 is configured to control any of the one or more first operating parameters of the first conveyor section and the one or more second operating parameters of the second conveyor section such that the first gap g1 is about the same as the second gap g2. In various embodiments, the controller 212 is configured to control any of the one or more first operating parameters of the first conveyor section and the one or more second operating parameters of the second conveyor section such that the first load density about the same as the second load density. **In** example embodiments, by adjusting any of the operation parameters for the conveyor sections while the conveyor sections move their corresponding objects, the gaps among and/or load density of the objects become more uniform.

In various embodiments, the conveyor control system may include any number of conveyor sections and each conveyor section may carry any number of objects. **In** various embodiments, the controller 212 and/or one or more radar devices determine any of the dimensions, shapes, distances, speeds, angles, and/or gaps among any of the objects using the sent and reflected electromagnetic waves as previously described. **In** various embodiments, the controller 212 and/or one or more radar devices determine a point cloud for any/or all the objects on any or all the conveyor sections. **In** various embodiments, the controller 212 determines gaps among any two or more objects may be determined using the methods described herein. For example, the controller 212 may determine a gap g3 between object 308 in the first conveyor section 302 and object 310 in the second conveyor section 304. The controller 212 may control any of the first and/or second parameters of the first and/or second conveyor sections such that the gap g3 is approximately similar to the gaps g1 or g2, and/or remains between determined minimum and maximum limits.

In various embodiments, load density for any section of a conveyor line may be determined using the methods described herein. **In** various embodiments, the controller 212 controls one or more operating parameter of any conveyor sections such that the gaps among the objects and/or load densities of various conveyor sections become approximately uniform or remain between minimum and maximum limits. **In** example embodiments, an approximately uniform gaps and/or load densities provide for more efficient operation of the conveyor system 200 and safer movement of objects as described herein.

In various embodiments herein, the minimum and maximum limits for the gaps among the objects and/or load densities may be predetermined or dynamically determined based on various conditions of the conveyor system 200. The conditions of the conveyor system 200 may include any of the overall load of the system, overall number of objects, type of objects, time of operation, etc.

In various embodiments, a conveyor line section may be any of an accumulation conveyor, a main conveyor, and/or sections of an accumulation conveyor or a main conveyor. The accumulation conveyor may be connected to a main conveyor and be configured to any of move objects on the way to and add them to the main conveyor line, take the objects off and move them away from the main conveyor line, and/or hold the objects temporarily for example on a side of the main conveyor line. For example, the accumulator section provides a temporary buffer zone for adding, removing, and/or moving objects. It is desirable to determine a load density of the objects on the accumulation conveyor and/or the main conveyor line in order to efficiently move the object between the two such that a load density remains approximately the same and/or within required boundaries for various sections of the conveyor line.

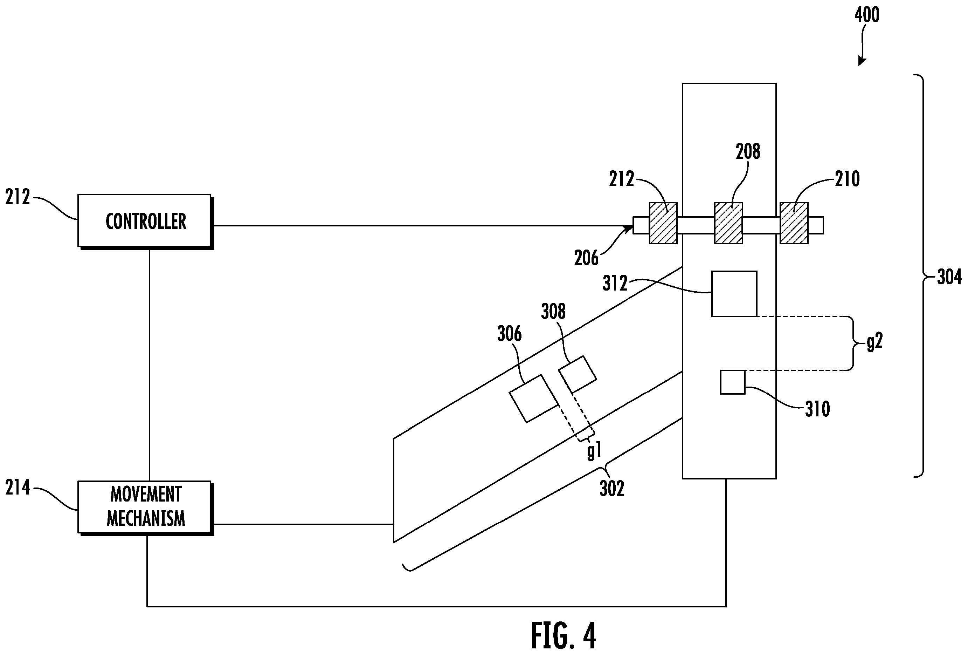

Referring now to Fig. 4, a schematic diagram depicting the conveyor control system 400 according to various embodiments herein is provided. In various embodiments, the first conveyor section 302 is an accumulation conveyor. In various embodiments, the second conveyor section 304 is a main conveyor the accumulation conveyor is connected to. The conveyor section 302 may be used for any of the functions of an accumulator as described here.

In example embodiments, the accumulation conveyor 302 moves the first and second objects 306 and 308 on the way to the main conveyor in order to add them to the main conveyor.

In various embodiments, the controller 212 determines if the second object 308 can be interleaved between the third and fourth objects 310 and 312. In various embodiments, the controller 212 by comparing the first dimensions with the second gap g2 determines if the second object 308 can be added to the main conveyor between the third and fourth objects 310 and 312. In example embodiments, the controller 212 determines that the second object 308 can be added to the main conveyor and/or being interleaved between the thirds and fourth objects, if the dimensions of the second object 308 is less than the second gap g2.

In example embodiments, the controller 212 determines that the second object 308 can be added to the main conveyor and/or being interleaved between the thirds and fourth objects, if after interleaving the second object 308 between the third and fourth objects 310 and 312, the gaps between the second object 308 and the third object 310 and between the second object 308 and the fourth object 312 remain more than the minimum limit for the gaps. For example, the controller 212 makes the determination using the dimensions of the second object 308, the second gap g2 and by determining if the difference between the two is at least twice the minimum limit for the gaps.

In various embodiments, the controller 212 determines the second object 308 can be added to the main conveyor and/or being interleaved between the thirds and fourth objects by determining if the load density on the main conveyor after adding the second object 308 remain below the maximum limit for load density. In example embodiment, the controller 212 analyses the point cloud, using e.g. any of the image analysis methods described herein, to determine if the second object 308 can be added to the main conveyor. For example, the controller 212 may determine if after adding the second object 308 to the main conveyor, the load density of the main conveyor remains below the maximum load density limit for the main conveyor. If the load density remains below the maximum load density limit, the controller 212 may determine that the second object 308 can be added to the main conveyor.

In various embodiments, the controller 212 controls any of the one or more first operating parameters of the first conveyor section 302 and the one or more second operating parameters of the second conveyor section 304 to add the second object 308 to the main conveyor and/or interleave the second object 308 between the third and fourth objects 310 and 312 if the controller 212 determines that the second object can be added to and/or interleaved between the third and fourth objects on the second conveyor section 304.

In various embodiments, any number of radar devices may be used in conveyor control systems described herein. In various embodiments, frequency modulated continuous wave (FMCW) radar device(s) may be used. In various embodiments, the arch 206 may be located on any part of the first or second conveyor sections 302 or 304. In various embodiments, any of the radar devices may be mounted on other structures and/or supports such as a pole, a column, a wall, etc.

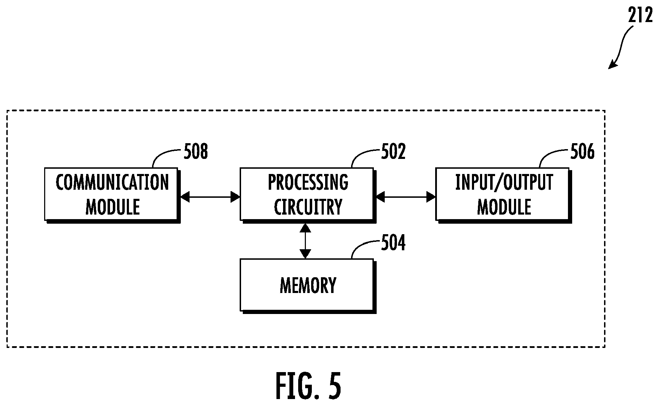

Referring now to FIG. 5, a schematic diagram depicting an example controller 212 of an example apparatus in electronic communication with various other components in accordance with various embodiments of the present disclosure is provided. For example, as described herein, the controller 212 may be in electronic communications with any of the radar devices and/or with the movement mechanism 214. As shown, the controller 212 comprises processing circuitry 502, a communication module 508, input/output module 506, a memory 504 and/or other components configured to perform various operations, procedures, functions or the like described herein.

In various embodiments, referring to Fig. 1, the controller 212 (such as the processing circuitry 502, communication module 508, input/output module 506 and memory 504) is electrically coupled to and/or in electronic communication with the movement mechanism 214. In various embodiments, the movement mechanism 214 may exchange (e.g., transmit and receive) data with the processing circuitry 502 of the controller 212.

The processing circuitry 502 may be implemented as, for example, various devices comprising one or a plurality of microprocessors with accompanying digital signal processors; one or a plurality of processors without accompanying digital signal processors; one or a plurality of coprocessors; one or a plurality of multi-core processors; one or a plurality of controllers; processing circuits; one or a plurality of computers; and various other processing elements (including integrated circuits, such as ASICs or FPGAs, or a certain combination thereof). In some embodiments, the processing circuitry 502 may comprise one or more processors. In one exemplary embodiment, the processing circuitry 502 is configured to execute instructions stored in the memory 504 or otherwise accessible by the processing circuitry 502. When executed by the processing circuitry 502, these instructions may enable the controller 212 to execute one or a plurality of the functions as described herein. No matter whether it is configured by hardware, firmware/software methods, or a combination thereof, the processing circuitry 502 may comprise entities capable of executing operations according to the embodiments of the present invention when correspondingly configured. Therefore, for example, when the processing circuitry 502 is implemented as an ASIC, an FPGA, or the like, the processing circuitry 502 may comprise specially configured hardware for implementing one or a plurality of operations described herein. Alternatively, as another example, when the processing circuitry 502 is implemented as an actuator of instructions (such as those that may be stored in the memory 504), the instructions may specifically configure the processing circuitry 502 to execute one or a plurality of methods, algorithms and operations described herein, such as those discussed with reference to any of the figures herein.

The memory 504 may comprise, for example, a volatile memory, a non-volatile memory, or a certain combination thereof. Although illustrated as a single memory in FIG. 5, the memory 504 may comprise a plurality of memory components. In various embodiments, the memory 504 may comprise, for example, a hard disk drive, a random access memory, a cache memory, a flash memory, a Compact Disc Read-Only Memory (CD-ROM), a Digital Versatile Disk Read-Only Memory (DVD-ROM), an optical disk, a circuit configured to store information, or a certain combination thereof. The memory 504 may be configured to store information, data, application programs, instructions, and etc., so that the controller 212 can execute various functions according to the embodiments of the present disclosure. For example, in at least some embodiments, the memory 504 is configured to cache input data for processing by the processing circuitry 502. Additionally or alternatively, in at least some embodiments, the memory 504 is configured to store program instructions for execution by the processing circuitry 502. The memory 504 may store information in the form of static and/or dynamic information. When the functions are executed, the stored information may be stored and/or used by the controller 212.

The communication module 508 may be implemented as any apparatus included in a circuit, hardware, a computer program product or a combination thereof, which is configured to receive and/or transmit data from/to another component or apparatus. The computer program product comprises computer-readable program instructions stored on a computer-readable medium (for example, the memory 504) and executed by a controller 212 (for example, the processing circuitry 502). In some embodiments, the communication module 508 (as with other components discussed herein) may be at least partially implemented as the processing circuitry 502 or otherwise controlled by the processing circuitry 502. In this regard, the communication module 508 may communicate with the processing circuitry 502, for example, through a bus. The communication module 508 may comprise, for example, antennas, transmitters, receivers, transceivers, network interface cards and/or supporting hardware and/or firmware/software, and is used for establishing communication with another apparatus. The communication module 508 may be configured to receive and/or transmit any data that may be stored by the memory 504 by using any protocol that can be used for communication between apparatuses. The communication module 508 may additionally or alternatively communicate with the memory 504, the input/output module 506 and/or any other component of the controller 212, for example, through a bus.

In some embodiments, the controller 212 may comprise an input/output module 506. The input/output module 506 may communicate with the processing circuitry 502 to receive instructions input by the user and/or to provide audible, visual, mechanical or other outputs to the user. Therefore, the input/output module 506 may be in electronic communication with supporting devices, such as a keyboard, a mouse, a display, a touch screen display, and/or other input/output mechanisms. Alternatively, at least some aspects of the input/output module 506 may be implemented on a device used by the user to communicate with the controller 212. The input/output module 506 may communicate with the memory 504, the communication module 508 and/or any other component, for example, through a bus. One or a plurality of input/output modules and/or other components may be included in the controller 212.

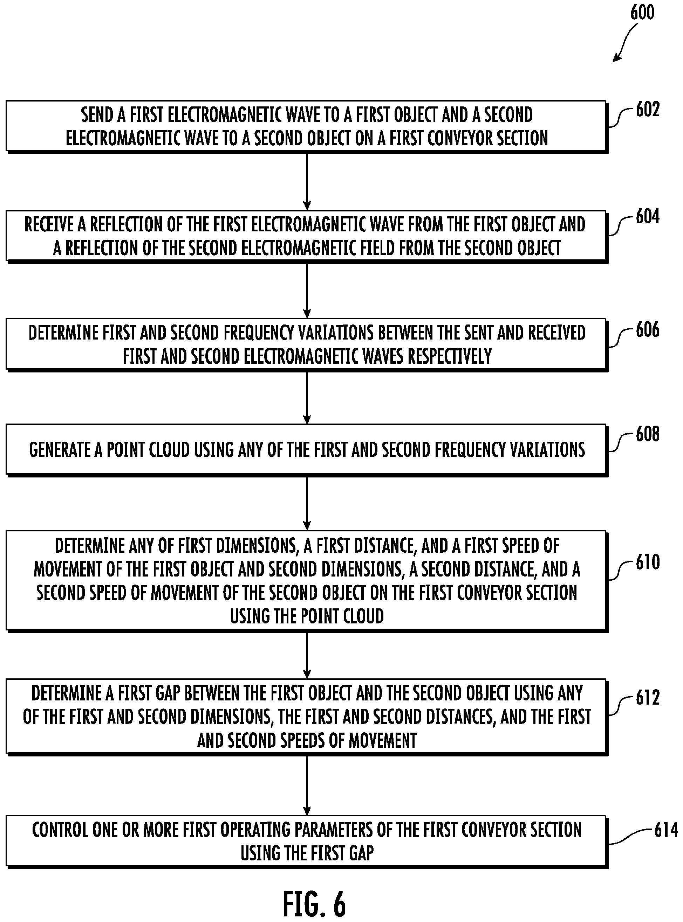

Referring now to FIG. 6, a flowchart diagrams illustrating example operations 600, in accordance with various embodiments of the present disclosure are provided.

In some example, the method 600 may be performed by a conveyor control system. The conveyor control system may be similar to the conveyor control system 200 described above with reference to FIGs. 2a, 2b, 3, 4. As noted above the conveyor control system may include controller 212 described above with reference to FIG. 5 and may similarly comprise processing circuitry 502, a communication module 508, an input/output module 506 and a memory 504. In some examples, the memory of the controller of the conveyor control system may store computer program instructions.

In various embodiments, at step 602, a radar device of the conveyor control system sends a first electromagnetic wave to a first object (for example but not limited to first object 306) and a second electromagnetic wave to a second object (for example the second object 308) on a first conveyor section (for example but not limited to the first conveyor section 302).

In various embodiments, at step 604, a radar device of the conveyor control system receives a reflection of the first electromagnetic wave from the first object and a reflection of the second electromagnetic field from the second object.

In the embodiments according to the invention, at step 606, any of the radar system and/or a controller (such as, but not limited to, the controller 212 of the conveyor control system 200 illustrated above referring to Figs. 2a-4) determines a first timing or frequency variations between the sent and received first electromagnetic waves and a second timing or frequency variations between the sent and received second electromagnetic waves.

In the embodiments according to the invention, at step 608, the controller generates a point cloud using any of the first and second timing or frequency variations. In various embodiments, timing or frequency variations may determine any of distance, speed, and/or direction of movement for each point on the conveyor line or the objects from which the electromagnetic wave is reflected from. In various embodiments, an angle to each point is determined using an angle of scan of the radar device when a corresponding electromagnetic wave reaches each point on the conveyor line or the objects.

In various embodiments, at step 610, the controller determines any of first dimensions, a first distance, and a first speed of movement of the first object using the point cloud. In various embodiments, the controller determines second dimensions, a second distance, and a second speed of movement of the second object on the first conveyor section using the point cloud. For example, the controller may apply any of the image processing methods described herein on the point cloud to determine dimensions, distance, speed, etc. of the objects.

In various embodiments, at step 610, the controller determines a first gap (for example but not limited to the gap g1 with reference to Figs. 3-4) between the first object and the second object using any of the first and second dimensions, the first and second distances, and the first and second speeds of movement.

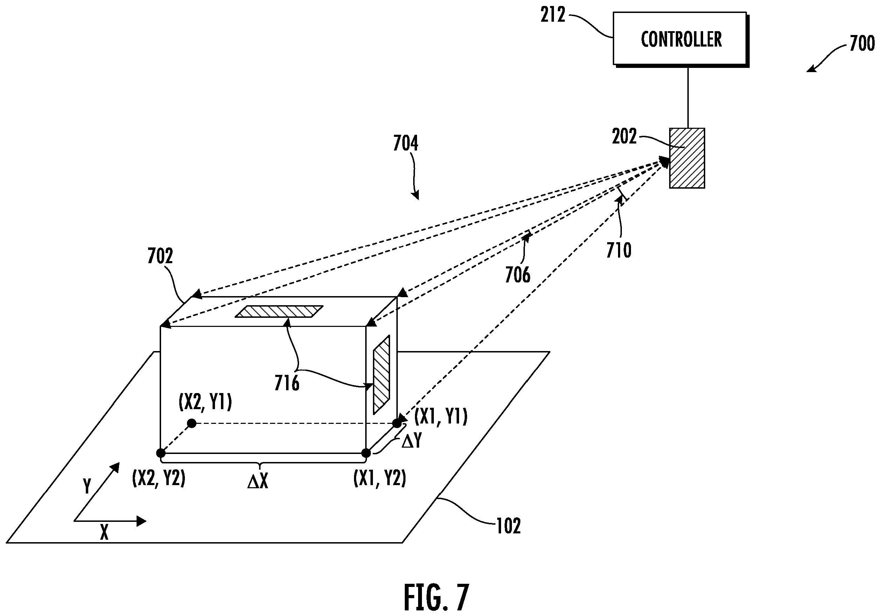

Referring now to Fig. 7, a schematic diagram illustrating an object 702 on a conveyor line 102 in accordance with various embodiments of the present disclosure is provided. In various embodiment, a radar device 202 sends and receives electromagnetic waves 704 to various points on the object 702 by scanning the filed of view including the object 702.

In various embodiments, the radar device 202 is in electronic communication with the controller 212. In various embodiments, the radar device 202 and/or the controller 212 determine a point cloud that includes the object 702 using any of the methods for generating point cloud described herein. In various embodiments, the radar device 202 and/or the controller 212 determine an elevation angle 710 of the object 702, for example by applying any of the image processing methods described herein to a point cloud. In various embodiments, the radar device 202 and/or the controller 212 determine an azimuth angle 706 of any section of the object 702, for example by applying any of the image processing methods described herein to a point cloud. It is noted that an azimuth angle of the periphery of the object 702 that is in contact to the conveyor line 102 may also be determined using similar methods described herein.

In various embodiments, using any of the elevation angle, the azimuth angle, and/or by applying image processing methods to the point cloud, the controller 212 determines coordinates of a first plurality of points on a periphery of the first object using the point cloud. In example embodiments, the coordinates of end points of the periphery of the object 702 where it is in contact with the conveyor line 102 may be determined. In example embodiments, the coordinates of corner points of the periphery of the object 702 where it is in contact with the conveyor line 102 may be determined. In example embodiments, the coordinates of the vertices the object 702 where it is in contact with the conveyor line 102 are determined. For example, as illustrated in Fig. 7, the coordinates (X1, Y1), (X1, Y2), (X2, Y1), (X2, Y2) of the bottom vertices of the objects 702 are determined.

In various embodiments, the controller 212 assigns a first identification to the first object using the coordinates. For example, an identification for the object 702 may be {(X1, Y1), (X1, Y2), (X2, Y1), (X2, Y2)}. For example, because at a given time each object has a unique set of coordinates of the first plurality of points on the periphery which is in contact with the conveyor line, an identification using the coordinates of the first plurality of points is a unique identification.

In various embodiments, the controller 212 determines a first destination for the first object using the first identification. For example, the controller 212 may query a database where each object is assigned a destination based on its identification. In various embodiments, the controller 212 controls the one or more first operating parameters of the conveyor section, for example first conveyor section 302 (referring to Figs. 3, 4) so that the first object reaches the first destination.

In various embodiments, a barcode 716 is located on one of the sides and/or facet of an object 702. In various examples, the barcode 716 may be used as the identification for the object 702 to determine its destination. In various embodiments, scanning devices may be used to scan the barcode and determine information such as the destination for the object 702. It is desirable to determine the location of the barcode 716 on the object so that the scanning device can scan the correct side for reading the barcode.

In example embodiments, the barcode 716 may be located on a top surface on the object. As the object is moved by the conveyor system, it may be rotated, and the barcode 716 may not remain at the initial location with reference to the conveyor line. For example, if the barcode 716 was initially placed on the top surface of the object 702, it may later be located on a side surface if the object 716 is rotated during the movement. In various embodiments, any of the radar device 202 and/or the controller 212 analyze the point cloud to detect the barcode 702 on the object 702. In various embodiments, the radar device 202 and/or the controller 212 may determine the location of the barcode 716, for example the side of the object where the barcode 716 is present. The radar device 202 and/or the controller 212 may transmit information indicating the location of the barcode 716 to the scanning device.

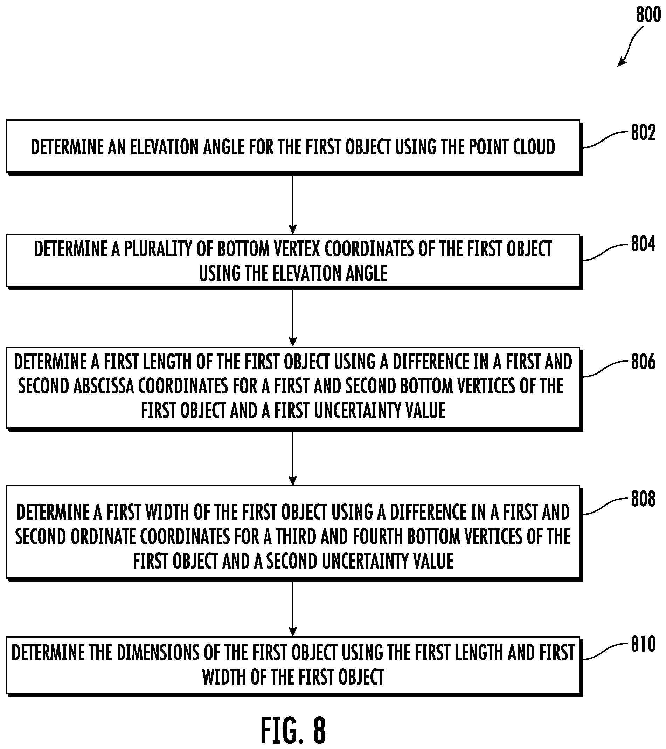

Referring now to FIG. 8, a flowchart diagrams illustrating example operations 800, in accordance with various embodiments of the present disclosure are provided.

In various embodiments, at step 802, a controller (for example, but not limited to controller 212) determines an elevation angle for the first object using any of the methods described herein, for example using the point cloud. In various embodiments, at step 804 the controller determines a plurality of bottom vertex coordinates of the first object using the elevation angle. In various embodiments, the controller determines a plurality of coordinates for a plurality of points on the object that are in contact with the conveyor line. In an example, referring to Fig. 7, the controller determines the coordinates (X1, Y1), (X1, Y2), (X2, Y1), (X2, Y2) of the bottom vertices of the objects 702.

In various embodiments, at step 806, the controller determines a first length of the first object using a difference in a first and second abscissa coordinates for a first and second bottom vertices of the first object and a first uncertainty value. In an example embodiment, the controller determines the first length as:

$$\Delta X = X1 - X2 + N1 \qquad \text{Eq.1}$$

where N1 denotes the first uncertainly value. In various embodiments, the first uncertainty value N1 is a function of any of noise, movement, obstruction, and imperfection of the first object which may reduce the accuracy of the measurement of the coordinates and the calculation of the first length.

In various embodiments, at step 808 the controller 212 determines a first width of the first object using a difference in a first and second ordinate coordinates for a third and fourth bottom vertices of the first object and a second uncertainty value. In an example embodiment, the controller determines the first width as:

$$\Delta Y = Y1 - Y2 + N2 \qquad \text{Eq. 2}$$

where N2 denotes the second uncertainly value. In various embodiments, the second uncertainty value N2 is a function of any of noise, movement, obstruction, and imperfection of the first object which may reduce the accuracy of the measurement of the coordinates and the calculation of the first width.

In various embodiment, at step 810 the controller 212 determines the dimensions of the first object using the first length and first width of the first object.

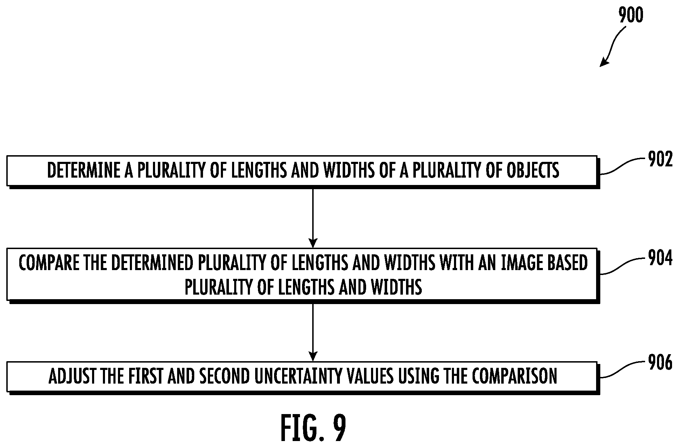

Referring now to FIG. 9, a flowchart diagrams illustrating example operations 900, in accordance with various embodiments of the present disclosure are provided. In various embodiments, at step 902 the controller determines a plurality of lengths and widths of a plurality of objects. In an example embodiment, referring to Figs. 2a, 2b, the controller 212 determines the width and lengths for any of the objects 104. In example embodiments, referring to Figs. 3, 4, the controller 212 determines the widths and lengths for any of the objects 306, 308, 310, 312.

In various embodiments, at step 904, the controller compares the determined plurality of lengths and widths using radar devices with an image-based plurality of lengths and widths. In example embodiments, referring to Figs. 2a-4, the conveyor control system 200 includes one or more imaging devices such as cameras. In various embodiments, the imaging devices provide a width and lengths for the objects moved in the conveyor system. In various embodiments, by comparing the calculated lengths and widths using radar devices, for example in steps 806 and 808 referring to Fig. 8 or as calculated by Eq. 1 and Eq. 2, with the image-based lengths and widths the controller determines the accuracy of the determined lengths and widths. In various embodiments, the calculated lengths and widths may be compared with predetermined lengths and widths for example of known size objects used for training the radar devices.

In various embodiments, the comparison determines the accuracy of the uncertainty values N1 and N2. In various embodiments, at step 906, the controller adjusts the first and second uncertainty values using the comparison. In various embodiments, the controller iterates through steps 902, 904, and 906 until the differences between the calculated dimensions (for example widths and lengths) and the image based or predetermined dimensions of the objects are less than a threshold.

In various embodiments herein, radar devices are used for detection of the objects. Radar devices may provide advantages over other detection mechanisms. Table I below provides a comparison between other detection sensors and methods such as light detection and ranging (lidar), infrared or thermal imaging, time of flight detection, and imaging cameras with radar devices. Various parameters have been studied and/or tested and a weight for each parameter has been provided. A higher value for a parameter of each detection system or method indicates a better capability of the sensor or method in detecting/determining the corresponding parameter. The example studies/test results provided in Table I, compare the use of various sensors or detection methods specifically with respect detecting objects in a conveyor control system and with respect to the example embodiments herein and may not be generalized to other applications, systems, environments and/or uses.

Table I

| Sensor Parameters | Parameter Weight | lidar | Infrared (Thermal imaging) | Time of flight | Camera | Radar |
|---|---|---|---|---|---|---|
| Long Range (up to 100m) | 5 | 9 | 3 | 3 | 5 | 9 |
| Range resolution in mm | 5 | 9 | 3 | 7 | 7 | 5 |
| Technology adaptation | 4 | 7 | 7 | 3 | 9 | 7 |
| Signal processing complexity | 4 | 5 | 7 | 7 | 5 | 7 |
| Time to market | 5 | 7 | 7 | 5 | 7 | 9 |
| Ruggedness for environmental condition | 3 | 5 | 3 | 7 | 5 | 9 |
| Cost | 4 | 3 | 5 | 5 | 5 | 7 |
| All light condition | 3 | 3 | 7 | 5 | 5 | 7 |
| Cost of maintenance | 4 | 3 | 9 | 7 | 5 | 9 |
| Overall Score | 37 | 221 | 207 | 199 | 221 | 283 |

The overall scores as shown in Table I, provide an overall comparison between the various senators or detection methods. As shown above, radar has the highest score comparing to the other sensors or detection methods for use in a conveyor control system according to various embodiments herein.

**In** some examples, one or more of the procedures and/or methods described herein, for example in FIGs. 6, 8, 9 may be embodied by computer program instructions, which may be stored by a memory (such as a non-transitory memory) of a system employing an embodiment of the present disclosure and executed by a processing circuitry (such as a processor) of the system. These computer program instructions may direct the system to function in a particular manner, such that the instructions stored in the memory circuitry produce an article of manufacture, the execution of which implements the function specified in the flow diagram step/operation(s). Further, the system may comprise one or more other circuitries. Various circuitries of the system may be electronically coupled between and/or among each other to transmit and/or receive energy, data and/or information.

In some examples, embodiments may take the form of a computer program product on a non-transitory computer-readable storage medium storing computer-readable program instruction (e.g., computer software). Any suitable computer-readable storage medium may be utilized, including non-transitory hard disks, CD-ROMs, flash memory, optical storage devices, or magnetic storage devices.

Although specific terms are employed herein, they are used in a generic and descriptive sense only and not for purposes of limitation.

**Claims**

1. A conveyor control system (200) comprising:

   a radar device (208, 210, 212) configured to:

      send a first electromagnetic wave to a first object (306) and a second electromagnetic wave to a second object (308) on a first conveyor section (302);
      receive a reflection of the first electromagnetic wave from the first object and a reflection of the second electromagnetic field from the second object; and
      determine first and second timing or frequency variations between the sent and received first and second electromagnetic waves respectively; and

   a controller (212) electronically coupled to the radar device, the controller configured to:

      generate a point cloud using any of the first and second timing or frequency variations;
      determine any of first dimensions, a first distance, and a first speed of movement of the first object and second dimensions, a second distance, and a second speed of movement of the second object on the first conveyor section using the point cloud;
      determine a first gap (g1) between the first object and the second object using any of the first and second dimensions, the first and second distances, and the first and second speeds of movement; and
      control one or more first operating parameters of the first conveyor section using the first gap.

2. The conveyor control system (200) of claim 1, wherein:

   the radar device (208, 210, 212) is configured to:

      send a third electromagnetic wave to a third object (310) and a fourth electromagnetic wave to a fourth object (312) on a second conveyor section (304);
      receive a reflection of the third electromagnetic wave from the third object and a reflection of the fourth electromagnetic field from the fourth object; and
      determine third and fourth timing or frequency variations between the sent and received third and fourth electromagnetic waves respectively; and

   the controller (212) is configured to:

      generate the point cloud using any of the third and fourth timing or frequency variations;
      determine any of third dimensions, a third distance, and a third speed of movement of the third object and fourth dimensions, a fourth distance, and a fourth speed of movement of the fourth object on the second conveyor section using the point cloud;
      determine a second gap (g2) between the third object and the fourth object using any of the third and fourth dimensions, the third and fourth distances, and the third and fourth speeds of movement; and
      control any of the one or more first operating parameters of the first conveyor section and one or more second operating parameters of the second conveyor section using any of the first gap and the second gap.

3. The conveyor control system (200) of claim 2, wherein the controller (212) is configured to:

determine any of a minimum first load density and a maximum first load density for the first conveyor section (302), a minimum second load density and a maximum second load density for the second conveyor section (304), a minimum first gap and a maximum first gap between the first and second objects, a minimum second gap and a maximum second gap between the third and fourth objects, wherein:

a first load density of the first conveyor section is determined using any of the first and second dimensions, the first and second distances, the first and second speeds of movement, the first gap, and the point cloud; and a second load density for the second conveyor section is determined using any of the third and fourth dimensions, the third and fourth distances, the third and fourth speeds of movement, the second gap, and the point cloud; and

control any of the one or more first operating parameters of the first conveyor section and the one or more second operating parameters of the second conveyor section such that any of the first gap remains between the minimum first gap and the maximum first gap, the second gap remains between the minimum second gap and the maximum second gap, the first load density remains between the minimum first load density and the maximum first load density, and the second load density remains between the minimum second load density and the maximum second load density.

4.  The conveyor control system (200; 400) of claim 2, wherein the first conveyor section (302) is an accumulation conveyor, and the second conveyor section (304) is a main conveyor connected to the accumulation conveyor.

5.  The conveyor control system (200; 400) of claim 4, wherein the controller (212) is configured to:

determine if the second object (308) can be interleaved between the third (310) and fourth objects (312) by comparing the second dimensions with the second gap (g2); and
control any of the one or more first operating parameters of the first conveyor section and the one or more second operating parameters of the second conveyor section to interleave the second object between the third and fourth objects if determined that the second object can be interleaved between the third and fourth objects.

6.  The conveyor control system (200) of claim 1, wherein:

the radar device (208, 210, 212) comprises a frequency modulated continuous wave, FMCW, radar device;
the controller (212) is configured to:

determine coordinates of a first plurality of points on a periphery of the first object (306) using the point cloud;
assign a first identification to the first object using the coordinates;
determine a first destination for the first object using the first identification; and
control the one or more first operating parameters of the first conveyor section so that the first object reaches the first destination.

7.  The conveyor control system (200) of claim 1, wherein the determining the first dimensions of the first object comprises:

determining an elevation angle for the first object (306) using the point cloud;
determining a plurality of bottom vertex coordinates of the first object using the elevation angle, wherein the plurality of the bottom vertices touch the first conveyor section;
determining a first length of the first object using a difference in a first and second abscissa coordinates for a first and second bottom vertices of the first object and a first uncertainty value, wherein the first uncertainty value is a function of any of noise, movement, obstruction, and imperfection of the first object;
determining a first width of the first object using a difference in a first and second ordinate coordinates for a third and fourth bottom vertices of the first object and a second uncertainty value, wherein the second uncertainty value is a function of any of the noise, movement, obstruction, and imperfection of the first object; and
determining the dimensions of the first object using the first length and first width of the first object.

8.  The conveyor control system (200) of claim 7, wherein the controller is configured to determine the first and second uncertainty values by:

iteratively determining a plurality of lengths and widths of a plurality of objects;

comparing the determined plurality of lengths and widths with an image-based plurality of lengths and widths; and adjusting the first and second uncertainty values using the comparison.

9. A method (600) for controlling a conveyor, the method comprising:

sending (602), by a radar device (208, 210, 212), a first electromagnetic wave to a first object (306) and a second electromagnetic wave to a second object (308) on a first conveyor section (302);
receiving (604), by the radar device, a reflection of the first electromagnetic wave from the first object and a reflection of the second electromagnetic field from the second object;
determining (606), by the radar device, first and second timing or frequency variations between the sent and received first and second electromagnetic waves respectively;
generating (608) a point cloud using any of the first and second timing or frequency variations;
determining (610) any of first dimensions, a first distance, and a first speed of movement of the first object and second dimensions, a second distance, and a second speed of movement of the second object on the first conveyor section using the point cloud;
determining (612) a first gap (g1) between the first object and the second object using any of the first and second dimensions, the first and second distances, and the first and second speeds of movement; and
controlling (614) one or more first operating parameters of the first conveyor section using the first gap.

10. The method (600) for controlling a conveyor according to claim 9, comprising:

sending, by the radar device, a third electromagnetic wave to a third object (310) and a fourth electromagnetic wave to a fourth object (312) on a second conveyor section (304);
receiving, by the radar device, a reflection of the third electromagnetic wave from the third object and a reflection of the fourth electromagnetic field from the fourth object;
determining, by the radar device, third and fourth timing or frequency variations between the sent and received third and fourth electromagnetic waves respectively;
generating the point cloud using any of the third and fourth timing or frequency variations;
determining any of third dimensions, a third distance, and a third speed of movement of the third object and fourth dimensions, a fourth distance, and a fourth speed of movement of the fourth object on the second conveyor section using the point cloud;
determining a second gap between the third object and the fourth object using any of the third and fourth dimensions, the third and fourth distances, and the third and fourth speeds of movement; and
controlling any of the one or more first operating parameters of the first conveyor section and one or more second operating parameters of the second conveyor section using any of the first gap and the second gap.

11. The method (600) for controlling a conveyor according to claim 10, comprising:

determining any of a minimum first load density and a maximum first load density for the first conveyor section (302), a minimum second load density and a maximum second load density for the second conveyor section (304), a minimum first gap and a maximum first gap between the first and second objects, a minimum second gap and a maximum second gap between the third and fourth objects, wherein:

a first load density of the first conveyor section is determined using any of the first and second dimensions, the first and second distances, the first and second speeds of movement, the first gap, and the point cloud; and
a second load density for the second conveyor section is determined using any of the third and fourth dimensions, the third and fourth distances, the third and fourth speeds of movement, the second gap, and the point cloud; and

controlling any of the one or more first operating parameters of the first conveyor section and the one or more second operating parameters of the second conveyor section such that any of the first gap remains between the minimum first gap and the maximum first gap, the second gap remains between the minimum second gap and the maximum second gap, the first load density remains between the minimum first load density and the maximum first load density, and the second load density remains between the minimum second load density and the maximum second load density.

12. The method (600) for controlling a conveyor according to claim 10, wherein the first conveyor section (302) is an accumulation conveyor, and the second conveyor section (304) is a main conveyor connected to the accumulation conveyor.

13. The method (600) for controlling a conveyor according to claim 12, comprising:

determining if the second object (308) can be interleaved between the third (310) and fourth (312) objects by comparing the second dimensions with the second gap (g2); and
controlling any of the one or more first operating parameters of the first conveyor section and the one or more second operating parameters of the second conveyor section to interleave the second object between the third and fourth objects if determined that the second object can be interleaved between the third and fourth objects.

14. The method (600) for controlling a conveyor according to claim 9, comprising:

determining coordinates of a first plurality of points on a periphery of the first object (306) using the point cloud;
assigning a first identification to the first object using the coordinates;
determining a first destination for the first object using the first identification; and
controlling the one or more first operating parameters of the first conveyor section so that the first object reaches the first destination.

15. The method (600) for controlling a conveyor according to claim 9, the method comprising:

determining (802) an elevation angle for the first object (206) using the point cloud;
determining (804) a plurality of bottom vertex coordinates of the first object using the elevation angle, wherein the plurality of the bottom vertices touch the first conveyor section;
determining (806) a first length of the first object using a difference in a first and second abscissa coordinates for a first and second bottom vertices of the first object and a first uncertainty value, wherein the first uncertainty value is a function of any of noise, movement, obstruction, and imperfection of the first object;
determining (808) a first width of the first object using a difference in a first and second ordinate coordinates for a third and fourth bottom vertices of the first object and a second uncertainty value, wherein the second uncertainty value is a function of any of the noise, movement, obstruction, and imperfection of the first object;
determining (810) the dimensions of the first object using the first length and first width of the first object;
iteratively determining (902) a plurality of lengths and widths of a plurality of objects;
comparing (904) the determined plurality of lengths and widths with an image-based plurality of lengths and widths; and
adjusting (906) the first and second uncertainty values using the comparison.

**Patentansprüche**

1. Förderersteuersystem (200) umfassend:

eine Radarvorrichtung (208, 210, 212), die dazu konfiguriert ist:

eine erste elektromagnetische Welle an ein erstes Objekt (306) und eine zweite elektromagnetische Welle an ein zweites Objekt (308) auf einem ersten Fördererabschnitt (302) zu senden;
eine Reflexion der ersten elektromagnetischen Welle von dem ersten Objekt und eine Reflexion des zweiten elektromagnetischen Feldes von dem zweiten Objekt zu empfangen; und
eine erste und zweite Zeit- oder Frequenzabweichung zwischen jeweils den gesendeten und den empfangenen ersten und zweiten elektromagnetischen Wellen zu bestimmen; und

eine Steuerung (212), die elektronisch mit der Radarvorrichtung gekoppelt ist, wobei die Steuerung dazu konfiguriert ist:

unter Verwendung einer beliebigen der ersten und zweiten Zeit- oder Frequenzabweichung eine Punktwolke zu erzeugen;
unter Verwendung der Punktwolke beliebige von ersten Abmessungen, einer ersten Distanz und einer ersten Bewegungsgeschwindigkeit des ersten Objekts und zweiten Abmessungen, einer zweiten Distanz und einer zweiten Bewegungsgeschwindigkeit des zweiten Objekts auf dem ersten Fördererabschnitt zu bestimmen;
unter Verwendung von beliebigen von den ersten und zweiten Abmessungen, der ersten und der zweiten Distanz und der ersten und der zweiten Bewegungsgeschwindigkeit eine erste Lücke (g1) zwischen dem ersten Objekt und dem zweiten Objekt zu bestimmen; und

unter Verwendung der ersten Lücke einen oder mehrere erste Betriebsparameter des ersten Fördererabschnitts zu steuern.

2. Förderersteuersystem (200) nach Anspruch 1, wobei:

die Radarvorrichtung (208, 210, 212) dazu konfiguriert ist:

eine dritte elektromagnetische Welle an ein drittes Objekt (310) und eine vierte elektromagnetische Welle an ein viertes Objekt (312) auf einem zweiten Fördererabschnitt (304) zu senden;
eine Reflexion der dritten elektromagnetischen Welle von dem dritten Objekt und eine Reflexion des vierten elektromagnetischen Feldes von dem vierten Objekt zu empfangen; und
eine dritte und vierte Zeit- oder Frequenzabweichung zwischen jeweils den gesendeten und den empfangenen dritten und vierten elektromagnetischen Wellen zu bestimmen; und

die Steuerung (212) dazu konfiguriert ist:

unter Verwendung einer beliebigen der dritten und vierten Zeit- oder Frequenzabweichung die Punktwolke zu erzeugen;
unter Verwendung der Punktwolke beliebige von dritten Abmessungen, einer dritten Distanz und einer dritten Bewegungsgeschwindigkeit des dritten Objekts und vierten Abmessungen, einer vierten Distanz und einer vierten Bewegungsgeschwindigkeit des vierten Objekts auf dem zweiten Fördererabschnitt zu bestimmen;
unter Verwendung von beliebigen von den dritten und vierten Abmessungen, der dritten und der vierten Distanz und der dritten und der vierten Bewegungsgeschwindigkeit eine zweite Lücke (g2) zwischen dem dritten Objekt und dem vierten Objekt zu bestimmen; und
unter Verwendung von beliebigen von der ersten Lücke und der zweiten Lücke beliebige von dem einen oder den mehreren ersten Betriebsparametern des ersten Fördererabschnitts und einem oder mehreren zweiten Betriebsparametern des zweiten Fördererabschnitts zu steuern.

3. Förderersteuersystem (200) nach Anspruch 2, wobei die Steuerung (212) dazu konfiguriert ist:

beliebige von einer minimalen ersten Beladungsdichte und einer maximalen ersten Beladungsdichte für den ersten Fördererabschnitt (302), einer minimalen zweiten Beladungsdichte und einer maximalen zweiten Beladungsdichte für den zweiten Fördererabschnitt (304), einer minimalen ersten Lücke und einer maximalen ersten Lücke zwischen dem ersten und dem zweiten Objekt, einer minimalen zweiten Lücke und einer maximalen zweiten Lücke zwischen dem dritten und dem vierten Objekt zu bestimmen, wobei:

eine erste Beladungsdichte des ersten Fördererabschnitts unter Verwendung von beliebigen von den ersten und den zweiten Abmessungen, der ersten und der zweiten Distanz, der ersten und der zweiten Bewegungsgeschwindigkeit, der ersten Lücke und der Punktwolke bestimmt wird; und
eine zweite Beladungsdichte für den zweiten Fördererabschnitt unter Verwendung von beliebigen von den dritten und den vierten Abmessungen, der dritten und der vierten Distanz, der dritten und der vierten Bewegungsgeschwindigkeit, der zweiten Lücke und der Punktwolke bestimmt wird; und

beliebige von dem einen oder den mehreren ersten Betriebsparametern des ersten Fördererabschnitts und dem einen oder den mehreren zweiten Betriebsparametern des zweiten Fördererabschnitts so zu steuern, dass Beliebiges von Folgendem gilt: die erste Lücke bleibt zwischen der minimalen ersten Lücke und der maximalen ersten Lücke, die zweite Lücke bleibt zwischen der minimalen zweiten Lücke und der maximalen zweiten Lücke, die erste Beladungsdichte bleibt zwischen der minimalen ersten Beladungsdichte und der maximalen ersten Beladungsdichte und die zweite Beladungsdichte bleibt zwischen der minimalen zweiten Beladungsdichte und der maximalen zweiten Beladungsdichte.

4. Förderersteuersystem (200; 400) nach Anspruch 2, wobei der erste Fördererabschnitt (302) ein Akkumulationsförderer ist und der zweite Fördererabschnitt (304) ein Hauptförderer ist, der mit dem Akkumulationsförderer verbunden ist.

5. Förderersteuersystem (200; 400) nach Anspruch 4, wobei die Steuerung (212) dazu konfiguriert ist:

zu bestimmen, ob das zweite Objekt (308) zwischen dem dritten (310) und dem vierten Objekt (312) eingeschoben werden kann, durch Vergleichen der zweiten Abmessungen mit der zweiten Lücke (g2); und beliebige von dem einen oder den mehreren ersten Betriebsparametern des ersten Fördererabschnitts und dem einen oder den mehreren zweiten Betriebsparametern des zweiten Fördererabschnitts dazu zu steuern, das zweite Objekt zwischen dem dritten und dem vierten Objekt einzuschieben, wenn bestimmt wird, dass das zweite Objekt zwischen dem dritten und dem vierten Objekt eingeschoben werden kann.

6. Förderersteuersystem (200) nach Anspruch 1, wobei:

die Radarvorrichtung (208, 210, 212) eine Frequenzmodulierte-Kontinuierliche-Welle-, FMCW-, Radarvorrichtung umfasst;
die Steuerung (212) dazu konfiguriert ist:

Koordinaten einer ersten Vielzahl von Punkten auf einem Umfang des ersten Objekts (306) unter Verwendung der Punktwolke zu bestimmen;
unter Verwendung der Koordinaten dem ersten Objekt eine erste Identifikation zuzuweisen;
unter Verwendung der ersten Identifikation einen ersten Zielort für das erste Objekt zu bestimmen; und
den einen oder die mehreren ersten Betriebsparameter des ersten Fördererabschnitts so zu steuern, dass das erste Objekt den ersten Zielort erreicht.

7. Förderersteuersystem (200) nach Anspruch 1, wobei das Bestimmen der ersten Abmessungen des ersten Objekts Folgendes umfasst:

Bestimmen eines Elevationswinkels für das erste Objekt (306) unter Verwendung der Punktwolke;
Bestimmen einer Vielzahl von unteren Scheitelpunktkoordinaten des ersten Objekts unter Verwendung des Elevationswinkels, wobei die Vielzahl der unteren Scheitelpunkte den ersten Fördererabschnitt berühren;
Bestimmen einer ersten Länge des ersten Objekts unter Verwendung einer Differenz zwischen einer ersten und einer zweiten Abszissenkoordinate für einen ersten und einen zweiten unteren Scheitelpunkt des ersten Objekts und eines ersten Unsicherheitswertes, wobei der erste Unsicherheitswert eine Funktion von Beliebigem aus Rauschen, Bewegung, Blockierung und Unvollkommenheit des ersten Objekts ist;
Bestimmen einer ersten Breite des ersten Objekts unter Verwendung einer Differenz zwischen einer ersten und einer zweiten Ordinatenkoordinate für einen dritten und einen vierten unteren Scheitelpunkt des ersten Objekts und eines zweiten Unsicherheitswertes, wobei der zweite Unsicherheitswert eine Funktion von Beliebigem aus Rauschen, Bewegung, Blockierung und Unvollkommenheit des ersten Objekts ist; und
Bestimmen der Abmessungen des ersten Objekts unter Verwendung der ersten Länge und der ersten Breite des ersten Objekts.

8. Förderersteuersystem (200) nach Anspruch 7, wobei die Steuerung dazu konfiguriert ist, den ersten und den zweiten Unsicherheitswert durch Folgendes zu bestimmen:

iteratives Bestimmen einer Vielzahl von Längen und Breiten einer Vielzahl von Objekten;
Vergleichen der bestimmten Vielzahl von Längen und Breiten mit einer bildbasierten Vielzahl von Längen und Breiten; und
Einstellen des ersten und des zweiten Unsicherheitswertes unter Verwendung des Vergleichs.

9. Verfahren (600) zum Steuern eines Förderers, das Verfahren umfassend:

Senden (602), durch eine Radarvorrichtung (208, 210, 212), einer ersten elektromagnetischen Welle an ein erstes Objekt (306) und einer zweiten elektromagnetischen Welle an ein zweites Objekt (308) auf einem erstem Fördererabschnitt (302);
Empfangen (604), durch die Radarvorrichtung, einer Reflexion der ersten elektromagnetischen Welle von dem ersten Objekt und einer Reflexion des zweiten elektromagnetischen Feldes von dem zweiten Objekt;
Bestimmen (606), durch die Radarvorrichtung, einer ersten und zweiten Zeit- oder Frequenzabweichung zwischen jeweils den gesendeten und den empfangenen ersten und zweiten elektromagnetischen Wellen;
Erzeugen (608) einer Punktwolke unter Verwendung einer beliebigen der ersten und zweiten Zeit- oder Frequenzabweichung;
Bestimmen (610) von beliebigen von ersten Abmessungen, einer ersten Distanz und einer ersten Bewegungsgeschwindigkeit des ersten Objekts und zweiten Abmessungen, einer zweiten Distanz und einer zweiten Bewegungsgeschwindigkeit des zweiten Objekts auf dem ersten Fördererabschnitt unter Verwendung der Punktwolke;

Bestimmen (612) einer ersten Lücke (g1) zwischen dem ersten Objekt und dem zweiten Objekt unter Verwendung von beliebigen von den ersten und zweiten Abmessungen, der ersten und der zweiten Distanz und der ersten und der zweiten Bewegungsgeschwindigkeit; und

Steuern (614) von einem oder mehreren ersten Betriebsparametern des ersten Fördererabschnitts unter Verwendung der ersten Lücke.

10. Verfahren (600) zum Steuern eines Förderers gemäß Anspruch 9, umfassend:

Senden, durch die Radarvorrichtung, einer dritten elektromagnetischen Welle an ein drittes Objekt (310) und einer vierten elektromagnetischen Welle an ein viertes Objekt (312) auf einem zweiten Fördererabschnitt (304);

Empfangen, durch die Radarvorrichtung, einer Reflexion der dritten elektromagnetischen Welle von dem dritten Objekt und einer Reflexion des vierten elektromagnetischen Feldes von dem vierten Objekt;

Bestimmen, durch die Radarvorrichtung, einer dritten und vierten Zeit- oder Frequenzabweichung zwischen jeweils den gesendeten und den empfangenen dritten und vierten elektromagnetischen Wellen;

Erzeugen der Punktwolke unter Verwendung einer beliebigen der dritten und vierten Zeit- oder Frequenzabweichung;

Bestimmen von beliebigen von dritten Abmessungen, einer dritten Distanz und einer dritten Bewegungsgeschwindigkeit des dritten Objekts und vierten Abmessungen, einer vierten Distanz und einer vierten Bewegungsgeschwindigkeit des vierten Objekts auf dem zweiten Fördererabschnitt unter Verwendung der Punktwolke;

Bestimmen einer zweiten Lücke zwischen dem dritten Objekt und dem vierten Objekt unter Verwendung von beliebigen von den dritten und vierten Abmessungen, der dritten und der vierten Distanz und der dritten und der vierten Bewegungsgeschwindigkeit; und

Steuern von beliebigen von dem einen oder den mehreren ersten Betriebsparametern des ersten Fördererabschnitts und von einem oder mehreren zweiten Betriebsparametern des zweiten Fördererabschnitts unter Verwendung von beliebigen von der ersten Lücke und der zweiten Lücke.

11. Verfahren (600) zum Steuern eines Förderers gemäß Anspruch 10, umfassend:

Bestimmen von beliebigen von einer minimalen ersten Beladungsdichte und einer maximalen ersten Beladungsdichte für den ersten Fördererabschnitt (302), einer minimalen zweiten Beladungsdichte und einer maximalen zweiten Beladungsdichte für den zweiten Fördererabschnitt (304), einer minimalen ersten Lücke und einer maximalen ersten Lücke zwischen dem ersten und dem zweiten Objekt, einer minimalen zweiten Lücke und einer maximalen zweiten Lücke zwischen dem dritten und dem vierten Objekt, wobei:

eine erste Beladungsdichte des ersten Fördererabschnitts unter Verwendung von beliebigen von den ersten und den zweiten Abmessungen, der ersten und der zweiten Distanz, der ersten und der zweiten Bewegungsgeschwindigkeit, der ersten Lücke und der Punktwolke bestimmt wird; und

eine zweite Beladungsdichte für den zweiten Fördererabschnitt unter Verwendung von beliebigen von den dritten und den vierten Abmessungen, der dritten und der vierten Distanz, der dritten und der vierten Bewegungsgeschwindigkeit, der zweiten Lücke und der Punktwolke bestimmt wird; und

Steuern von beliebigen von dem einen oder den mehreren ersten Betriebsparametern des ersten Fördererabschnitts und von dem einen oder den mehreren zweiten Betriebsparametern des zweiten Fördererabschnitts, sodass Beliebiges aus Folgendem gilt: die erste Lücke bleibt zwischen der minimalen ersten Lücke und der maximalen ersten Lücke, die zweite Lücke bleibt zwischen der minimalen zweiten Lücke und der maximalen zweiten Lücke, die erste Beladungsdichte bleibt zwischen der minimalen ersten Beladungsdichte und der maximalen ersten Beladungsdichte und die zweite Beladungsdichte bleibt zwischen der minimalen zweiten Beladungsdichte und der maximalen zweiten Beladungsdichte.

12. Verfahren (600) zum Steuern eines Förderers gemäß Anspruch 10, wobei der erste Fördererabschnitt (302) ein Akkumulationsförderer ist und der zweite Fördererabschnitt (304) ein Hauptförderer ist, der mit dem Akkumulationsförderer verbunden ist.

13. Verfahren (600) zum Steuern eines Förderers gemäß Anspruch 12, umfassend:

Bestimmen, ob das zweite Objekt (308) zwischen dem dritten (310) und dem vierten (312) Objekt eingeschoben werden kann, durch Vergleichen der zweiten Abmessungen mit der zweiten Lücke (g2); und
Steuern von beliebigen von dem einen oder den mehreren ersten Betriebsparametern des ersten Fördererabschnitts und dem einen oder den mehreren zweiten Betriebsparametern des zweiten Fördererabschnitts dazu, das zweite Objekt zwischen dem dritten und dem vierten Objekt einzuschieben, wenn bestimmt wird, dass das zweite Objekt zwischen dem dritten und dem vierten Objekt eingeschoben werden kann.

14. Verfahren (600) zum Steuern eines Förderers gemäß Anspruch 9, umfassend:

Bestimmen von Koordinaten einer ersten Vielzahl von Punkten auf einem Umfang des ersten Objekts (306) unter Verwendung der Punktwolke;
Zuweisen einer ersten Identifikation zu dem ersten Objekt unter Verwendung der Koordinaten;
Bestimmen eines ersten Zielortes für das erste Objekt unter Verwendung der ersten Identifikation; und
Steuern des einen oder der mehreren ersten Betriebsparameter des ersten Fördererabschnitts, sodass das erste Objekt den ersten Zielort erreicht.

15. Verfahren (600) zum Steuern eines Förderers gemäß Anspruch 9, das Verfahren umfassend:

Bestimmen (802) eines Elevationswinkels für das erste Objekt (206) unter Verwendung der Punktwolke;
Bestimmen (804) einer Vielzahl von unteren Scheitelpunktkoordinaten des ersten Objekts unter Verwendung des Elevationswinkels, wobei die Vielzahl der unteren Scheitelpunkte den ersten Fördererabschnitt berühren;
Bestimmen (806) einer ersten Länge des ersten Objekts unter Verwendung einer Differenz zwischen einer ersten und einer zweiten Abszissenkoordinate für einen ersten und einen zweiten unteren Scheitelpunkt des ersten Objekts und eines ersten Unsicherheitswertes, wobei der erste Unsicherheitswert eine Funktion ist von Beliebigem aus Rauschen, Bewegung, Blockierung und Unvollkommenheit des ersten Objekts;
Bestimmen (808) einer ersten Breite des ersten Objekts unter Verwendung einer Differenz zwischen einer ersten und einer zweiten Ordinatenkoordinate für einen dritten und einen vierten unteren Scheitelpunkt des ersten Objekts und eines zweiten Unsicherheitswertes, wobei der zweite Unsicherheitswert eine Funktion ist von Beliebigem aus Rauschen, Bewegung, Blockierung und Unvollkommenheit des ersten Objekts;
Bestimmen (810) der Abmessungen des ersten Objekts unter Verwendung der ersten Länge und der ersten Breite des ersten Objekts;
iteratives Bestimmen (902) einer Vielzahl von Längen und Breiten einer Vielzahl von Objekten;
Vergleichen (904) der bestimmten Vielzahl von Längen und Breiten mit einer bildbasierten Vielzahl von Längen und Breiten; und
Einstellen (906) des ersten und des zweiten Unsicherheitswertes unter Verwendung des Vergleichs.

**Revendications**

1. Système de commande de convoyeur (200) comprenant :

un dispositif radar (208, 210, 212) configuré pour :

envoyer une première onde électromagnétique vers un premier objet (306) et une deuxième onde électromagnétique vers un deuxième objet (308) sur une première section de convoyeur (302) ;
recevoir une réflexion de la première onde électromagnétique provenant du premier objet et une réflexion du deuxième champ électromagnétique provenant du deuxième objet ; et
déterminer des premières et deuxièmes variations temporelles ou fréquentielles entre les première et deuxième ondes électromagnétiques envoyées et reçues respectivement ; et

un contrôleur (212) couplé électriquement au dispositif radar, le contrôleur étant configuré pour :

générer un nuage de points en utilisant l'une quelconque parmi les premières et deuxièmes variations temporelles ou fréquentielles ;
déterminer l'une quelconque parmi des premières dimensions, une première distance, et une première vitesse de déplacement du premier objet, ainsi que des deuxièmes dimensions, une deuxième distance et une deuxième vitesse de déplacement du deuxième objet sur la première section de convoyeur en utilisant le nuage de points ;
déterminer un premier espacement (g1) entre le premier objet et le deuxième objet en utilisant l'une quelconque parmi les premières et deuxièmes dimensions, les première et deuxième distances et les première et deuxième vitesses de déplacement ; et

commander un ou plusieurs premiers paramètres de fonctionnement de la première section de convoyeur en utilisant le premier espacement.

**2.** Système de commande de convoyeur (200) de la revendication 1, dans lequel :

le dispositif radar (208, 210, 212) est configuré pour :

envoyer une troisième onde électromagnétique vers un troisième objet (310) et une quatrième onde électromagnétique vers un quatrième objet (312) sur une deuxième section de convoyeur (304) ;
recevoir une réflexion de la troisième onde électromagnétique provenant du troisième objet et une réflexion du quatrième champ électromagnétique provenant du quatrième objet ; et
déterminer des troisièmes et quatrièmes variations temporelles ou fréquentielles entre les troisième et quatrième ondes électromagnétiques envoyées et reçues respectivement ; et

le contrôleur (212) est configuré pour :

générer le nuage de points en utilisant l'une quelconque parmi les troisièmes et quatrièmes variations temporelles ou fréquentielles ;
déterminer l'une quelconque parmi des troisièmes dimensions, une troisième distance et une troisième vitesse de déplacement du troisième objet, ainsi que des quatrièmes dimensions, une quatrième distance et une quatrième vitesse de déplacement du quatrième objet sur la deuxième section de convoyeur en utilisant le nuage de points ;
déterminer un deuxième espacement (g2) entre le troisième objet et le quatrième objet en utilisant l'une quelconque parmi les troisièmes et quatrièmes dimensions, les troisième et quatrième distances, et les troisième et quatrième vitesses de déplacement ; et
commander l'un quelconque parmi lesdits un ou plusieurs premiers paramètres de fonctionnement de la première section de convoyeur et un ou plusieurs deuxièmes paramètres de fonctionnement de la deuxième section de convoyeur en utilisant l'un quelconque parmi le premier espacement et le deuxième espacement.

**3.** Système de commande de convoyeur (200) de la revendication 2, dans lequel le contrôleur (212) est configuré pour :

déterminer l'une quelconque parmi une première densité de charge minimale et une première densité de charge maximale pour la première section de convoyeur (302), une deuxième densité de charge minimale et une deuxième densité de charge maximale pour la deuxième section de convoyeur (304), un premier espacement minimal et un premier espacement maximal entre les premier et deuxième objets, un deuxième espacement minimal et un deuxième espacement maximal entre les troisième et quatrième objets, dans lequel :

une première densité de charge de la première section de convoyeur est déterminée en utilisant l'une quelconque parmi les premières et deuxièmes dimensions, les première et deuxième distances, les première et deuxième vitesses de déplacement, le premier espacement, et le nuage de points ; et
une deuxième densité de charge pour la deuxième section de convoyeur est déterminée en utilisant l'une quelconque parmi les troisièmes et quatrièmes dimensions, les troisième et quatrième distances, les troisième et quatrième vitesses de déplacement, le deuxième espacement, et le nuage de points ; et

commander l'un quelconque parmi lesdits un ou plusieurs premiers paramètres de fonctionnement de la première section de convoyeur et lesdits un ou plusieurs deuxièmes paramètres de fonctionnement de la deuxième section de convoyeur de sorte que l'un quelconque du premier espacement reste entre le premier espacement minimal et le premier espacement maximal, le deuxième espacement reste entre le deuxième espacement minimal et le deuxième espacement maximal, la première densité de charge reste entre la première densité de charge minimale et la première densité de charge maximale, et la deuxième densité de charge reste entre la deuxième densité de charge minimale et la deuxième densité de charge maximale.

**4.** Système de commande de convoyeur (200 ; 400) de la revendication 2, dans lequel la première section de convoyeur (302) est un convoyeur d'accumulation, et la deuxième section de convoyeur (304) est un convoyeur principal connecté au convoyeur d'accumulation.

**5.** Système de commande de convoyeur (200 ; 400) de la revendication 4, dans lequel le contrôleur (212) est configuré pour :

déterminer si le deuxième objet (308) peut être intercalé entre les troisième (310) et quatrième objets (312) en comparant les deuxièmes dimensions avec le deuxième espacement (g2) ; et

commander l'un quelconque parmi lesdits un ou plusieurs premiers paramètres de fonctionnement de la première section de convoyeur et lesdits un ou plusieurs deuxièmes paramètres de fonctionnement de la deuxième section de convoyeur pour intercaler le deuxième objet entre les troisième et quatrième objets s'il est déterminé que le deuxième objet peut être intercalé entre les troisième et quatrième objets.

**6.** Système de commande de convoyeur (200) de la revendication 1, dans lequel :

le dispositif radar (208, 210, 212) comprend un dispositif radar à ondes continues modulées en fréquence, FMCW ;

le contrôleur (212) est configuré pour :

déterminer des coordonnées d'une première pluralité de points sur une périphérie du premier objet (306) en utilisant le nuage de points ;

attribuer une première identification au premier objet en utilisant les coordonnées ;

déterminer une première destination pour le premier objet en utilisant la première identification ; et

commander lesdits un ou plusieurs premiers paramètres de fonctionnement de la première section de convoyeur de sorte que le premier objet atteigne la première destination.

**7.** Système de commande de convoyeur (200) de la revendication 1, dans lequel la détermination des premières dimensions du premier objet comprend :

la détermination d'un angle d'élévation pour le premier objet (306) en utilisant le nuage de points ;

la détermination d'une pluralité de coordonnées de sommets inférieurs du premier objet en utilisant l'angle d'élévation, dans laquelle la pluralité des sommets inférieurs touche la première section de convoyeur ;

la détermination d'une première longueur du premier objet en utilisant une différence entre des premières et deuxièmes coordonnées d'abscisse pour un premier et un deuxième sommets inférieurs du premier objet et une première valeur d'incertitude, dans laquelle la première valeur d'incertitude est une fonction de l'un quelconque parmi du bruit, du déplacement, de l'obstruction et de l'imperfection du premier objet ;

la détermination d'une première largeur du premier objet en utilisant une différence entre des premières et deuxièmes coordonnées d'ordonnée pour un troisième et un quatrième sommets inférieurs du premier objet et une deuxième valeur d'incertitude, dans laquelle la deuxième valeur d'incertitude est une fonction de l'un quelconque parmi du bruit, du déplacement, de l'obstruction et de l'imperfection du premier objet ; et

la détermination des dimensions du premier objet en utilisant la première longueur et la première largeur du premier objet.

**8.** Système de commande de convoyeur (200) de la revendication 7, dans lequel le contrôleur est configuré pour déterminer les première et deuxième valeurs d'incertitude par :

la détermination de manière itérative d'une pluralité de longueurs et de largeurs d'une pluralité d'objets ;

la comparaison de la pluralité déterminée de longueurs et de largeurs avec une pluralité de longueurs et de largeurs basée sur des images ; et

l'ajustement des première et deuxième valeurs d'incertitude en utilisant la comparaison.

**9.** Procédé (600) de commande d'un convoyeur, le procédé comprenant :

l'envoi (602), par un dispositif radar (208, 210, 212), d'une première onde électromagnétique vers un premier objet (306) et d'une deuxième onde électromagnétique vers un deuxième objet (308) sur une première section de convoyeur (302) ;

la réception (604), par le dispositif radar, d'une réflexion de la première onde électromagnétique provenant du premier objet et d'une réflexion du deuxième champ électromagnétique provenant du deuxième objet ;

la détermination (606), par le dispositif radar, des premières et deuxièmes variations temporelles ou fréquentielles entre les première et deuxième ondes électromagnétiques envoyées et reçues respectivement ;

la génération (608) d'un nuage de points en utilisant l'une quelconque parmi les premières et deuxièmes variations temporelles ou fréquentielles ;

la détermination (610) de l'une quelconque parmi des premières dimensions, une première distance et une première vitesse de déplacement du premier objet, ainsi que des deuxièmes dimensions, une deuxième distance et une deuxième vitesse de déplacement du deuxième objet sur la première section de convoyeur en utilisant le nuage de points ;

la détermination (612) d'un premier espacement (g1) entre le premier objet et le deuxième objet en utilisant l'une quelconque parmi les premières et deuxièmes dimensions, les première et deuxième distances, et les première et deuxième vitesses de déplacement ; et

la commande (614) d'un ou plusieurs premiers paramètres de fonctionnement de la première section de convoyeur en utilisant le premier espacement.

10. Procédé (600) de commande d'un convoyeur selon la revendication 9, comprenant :

l'envoi, par le dispositif radar, d'une troisième onde électromagnétique vers un troisième objet (310) et d'une quatrième onde électromagnétique vers un quatrième objet (312) sur une deuxième section de convoyeur (304) ;

la réception, par le dispositif radar, d'une réflexion de la troisième onde électromagnétique provenant du troisième objet et une réflexion du quatrième champ électromagnétique provenant du quatrième objet ;

la détermination, par le dispositif radar, des troisièmes et quatrièmes variations temporelles ou fréquentielles entre les troisième et quatrième ondes électromagnétiques envoyées et reçues respectivement ;

la génération du nuage de points en utilisant l'une quelconque parmi les troisièmes et quatrièmes variations temporelles ou fréquentielles ;

la détermination de l'une quelconque parmi des troisièmes dimensions, une troisième distance et une troisième vitesse de déplacement du troisième objet, ainsi que des quatrièmes dimensions, une quatrième distance et une quatrième vitesse de déplacement du quatrième objet sur la deuxième section de convoyeur en utilisant le nuage de points ;

la détermination d'un deuxième espacement entre le troisième objet et le quatrième objet en utilisant l'une quelconque parmi les troisièmes et quatrièmes dimensions, les troisième et quatrième distances, et les troisième et quatrième vitesses de déplacement ; et

la commande de l'un quelconque parmi lesdits un ou plusieurs premiers paramètres de fonctionnement de la première section de convoyeur et un ou plusieurs deuxièmes paramètres de fonctionnement de la deuxième section de convoyeur en utilisant l'un quelconque parmi le premier espacement et le deuxième espacement.

11. Procédé (600) de commande d'un convoyeur selon la revendication 10, comprenant :

la détermination de l'une quelconque parmi une première densité de charge minimale et une première densité de charge maximale pour la première section de convoyeur (302), une deuxième densité de charge minimale et une deuxième densité de charge maximale pour la deuxième section de convoyeur (304), un premier espacement minimal et un premier espacement maximal entre les premier et deuxième objets, un deuxième espacement minimal et un deuxième espacement maximal entre les troisième et quatrième objets, dans laquelle :

une première densité de charge de la première section de convoyeur est déterminée en utilisant l'une quelconque parmi les premières et deuxièmes dimensions, les première et deuxième distances, les première et deuxième vitesses de déplacement, le premier espacement, et le nuage de points ; et

une deuxième densité de charge pour la deuxième section de convoyeur est déterminée en utilisant l'une quelconque parmi les troisièmes et quatrièmes dimensions, les troisième et quatrième distances, les troisième et quatrième vitesses de déplacement, le deuxième espacement, et le nuage de points ; et

la commande de l'un quelconque parmi lesdits un ou plusieurs premiers paramètres de fonctionnement de la première section de convoyeur et lesdits un ou plusieurs deuxièmes paramètres de fonctionnement de la deuxième section de convoyeur de sorte que l'un quelconque du premier espacement reste entre le premier espacement minimal et le premier espacement maximal, le deuxième espacement reste entre le deuxième espacement minimal et le deuxième espacement maximal, la première densité de charge reste entre la première densité de charge minimale et la première densité de charge maximale, et la deuxième densité de charge reste entre la deuxième densité de charge minimale et la deuxième densité de charge maximale.

12. Procédé (600) de commande d'un convoyeur selon la revendication 10, dans lequel la première section de convoyeur (302) est un convoyeur d'accumulation et la deuxième section de convoyeur (304) est un convoyeur principal connecté au convoyeur d'accumulation.

**13.** Procédé (600) de commande d'un convoyeur selon la revendication 12, comprenant :

la détermination si le deuxième objet (308) peut être intercalé entre les troisième (310) et quatrième (312) objets en comparant les deuxièmes dimensions avec le deuxième espacement (g2) ; et

la commande de l'un quelconque parmi lesdits un ou plusieurs premiers paramètres de fonctionnement de la première section de convoyeur et lesdits un ou plusieurs deuxièmes paramètres de fonctionnement de la deuxième section de convoyeur pour intercaler le deuxième objet entre les troisième et quatrième objets s'il est déterminé que le deuxième objet peut être intercalé entre les troisième et quatrième objets.

**14.** Procédé (600) de commande d'un convoyeur selon la revendication 9, comprenant :

la détermination des coordonnées d'une première pluralité de points sur une périphérie du premier objet (306) en utilisant le nuage de points ;

l'attribution d'une première identification au premier objet en utilisant les coordonnées ;

la détermination d'une première destination pour le premier objet en utilisant la première identification ; et

la commande desdits un ou plusieurs premiers paramètres de fonctionnement de la première section de convoyeur de sorte que le premier objet atteigne la première destination.

**15.** Procédé (600) de commande d'un convoyeur selon la revendication 9, le procédé comprenant :

la détermination (802) d'un angle d'élévation pour le premier objet (206) en utilisant le nuage de points ;

la détermination (804) d'une pluralité de coordonnées de sommets inférieurs du premier objet en utilisant l'angle d'élévation, dans laquelle la pluralité des sommets inférieurs touche la première section de convoyeur ;

la détermination (806) d'une première longueur du premier objet en utilisant une différence entre des premières et deuxièmes coordonnées d'abscisse pour un premier et deuxième sommets inférieurs du premier objet et une première valeur d'incertitude, dans laquelle la première valeur d'incertitude est une fonction de l'un quelconque parmi du bruit, du déplacement, de l'obstruction et de l'imperfection du premier objet ;

la détermination (808) d'une première largeur du premier objet en utilisant une différence entre des premières et deuxièmes coordonnées d'ordonnée pour un troisième et un quatrième sommets inférieurs du premier objet et une deuxième valeur d'incertitude, dans laquelle la deuxième valeur d'incertitude est une fonction de l'un quelconque parmi du bruit, du déplacement, de l'obstruction et de l'imperfection du premier objet ;

la détermination (810) des dimensions du premier objet en utilisant la première longueur et la première largeur du premier objet ;

la détermination de manière itérative (902) d'une pluralité de longueurs et de largeurs d'une pluralité d'objets ;

la comparaison (904) de la pluralité déterminée de longueurs et de largeurs avec une pluralité de longueurs et de largeurs basée sur des images ; et

l'ajustement (906) des première et deuxième valeurs d'incertitude en utilisant la comparaison.

FIG. 1B
(PRIOR ART)

FIG. 1A
(PRIOR ART)

FIG. 2A

FIG. 2B

EP 4 368 541 B1

FIG. 3

FIG. 4

EP 4 368 541 B1

212

FIG. 5

600

SEND A FIRST ELECTROMAGNETIC WAVE TO A FIRST OBJECT AND A SECOND ELECTROMAGNETIC WAVE TO A SECOND OBJECT ON A FIRST CONVEYOR SECTION — 602

RECEIVE A REFLECTION OF THE FIRST ELECTROMAGNETIC WAVE FROM THE FIRST OBJECT AND A REFLECTION OF THE SECOND ELECTROMAGNETIC FIELD FROM THE SECOND OBJECT — 604

DETERMINE FIRST AND SECOND FREQUENCY VARIATIONS BETWEEN THE SENT AND RECEIVED FIRST AND SECOND ELECTROMAGNETIC WAVES RESPECTIVELY — 606

GENERATE A POINT CLOUD USING ANY OF THE FIRST AND SECOND FREQUENCY VARIATIONS — 608

DETERMINE ANY OF FIRST DIMENSIONS, A FIRST DISTANCE, AND A FIRST SPEED OF MOVEMENT OF THE FIRST OBJECT AND SECOND DIMENSIONS, A SECOND DISTANCE, AND A SECOND SPEED OF MOVEMENT OF THE SECOND OBJECT ON THE FIRST CONVEYOR SECTION USING THE POINT CLOUD — 610

DETERMINE A FIRST GAP BETWEEN THE FIRST OBJECT AND THE SECOND OBJECT USING ANY OF THE FIRST AND SECOND DIMENSIONS, THE FIRST AND SECOND DISTANCES, AND THE FIRST AND SECOND SPEEDS OF MOVEMENT — 612

CONTROL ONE OR MORE FIRST OPERATING PARAMETERS OF THE FIRST CONVEYOR SECTION USING THE FIRST GAP — 614

FIG. 6

FIG. 7

EP 4 368 541 B1

800

DETERMINE AN ELEVATION ANGLE FOR THE FIRST OBJECT USING THE POINT CLOUD — 802

DETERMINE A PLURALITY OF BOTTOM VERTEX COORDINATES OF THE FIRST OBJECT USING THE ELEVATION ANGLE — 804

DETERMINE A FIRST LENGTH OF THE FIRST OBJECT USING A DIFFERENCE IN A FIRST AND SECOND ABSCISSA COORDINATES FOR A FIRST AND SECOND BOTTOM VERTICES OF THE FIRST OBJECT AND A FIRST UNCERTAINTY VALUE — 806

DETERMINE A FIRST WIDTH OF THE FIRST OBJECT USING A DIFFERENCE IN A FIRST AND SECOND ORDINATE COORDINATES FOR A THIRD AND FOURTH BOTTOM VERTICES OF THE FIRST OBJECT AND A SECOND UNCERTAINTY VALUE — 808

DETERMINE THE DIMENSIONS OF THE FIRST OBJECT USING THE FIRST LENGTH AND FIRST WIDTH OF THE FIRST OBJECT — 810

FIG. 8

900

DETERMINE A PLURALITY OF LENGTHS AND WIDTHS OF A PLURALITY OF OBJECTS — 902

COMPARE THE DETERMINED PLURALITY OF LENGTHS AND WIDTHS WITH AN IMAGE BASED PLURALITY OF LENGTHS AND WIDTHS — 904

ADJUST THE FIRST AND SECOND UNCERTAINTY VALUES USING THE COMPARISON — 906

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180173161 A1
- WO 2021074687 A1
- EP 2504259 B1
- US 20160221762 A1